# EUROPÄISCHE PATENTANMELDUNG

(11) **EP 3 260 185 A1**
(43) Veröffentlichungstag der Anmeldung: **27.12.2017**
(21) Anmeldenummer: 16001394.2
(22) Anmeldetag: 21.06.2016
(51) Int. Cl.: B01D 53/04, B01D 53/047, C10L 3/10

(54) **VORRICHTUNG ZUR TEMPERATURWECHSEL-ADSORPTION UND VERFAHREN ZUR TEMPERATURWECHSEL-ADSORPTION FÜR DIE REINIGUNG VON GASEN**

(71) Anmelder: Donaldson Filtration Deutschland GmbH, 42781 Haan (DE)
(72) Erfinder: Klaus, Michel, 40215 Düsseldorf (DE)
(74) Vertreter: Tilmann, Max Wilhelm

(57) **Zusammenfassung**

Die Erfindung betrifft eine Vorrichtung zur Temperaturwechsel-Adsorption mit einem ersten Behälter und einem zweiten Behälter und einem dritten Behälter, bei der der erste, der zweite und der dritte Behälter jeweils zumindest ein Adsorptionsmittel aufweisen, das für die Temperaturwechsel-Adsorption geeignet ist, wobei der erste, der zweite und der dritte Behälter jeweils einen Einlass für das zu reinigende Gas und einen Auslass für das gereinigte Gas aufweisen, der erste, der zweite und der dritte Behälter jeweils einen Einlass für kühles Regeneriergas aufweisen, der insbesondere bevorzugt durch den Einlass für das gereinigte Gas gebildet wird, der erste, der zweite und der dritte Behälter jeweils einen Auslass für erwärmtes Regeneriergas aufweisen, der insbesondere bevorzugt durch den Auslass für das gereinigte Gas gebildet wird, der erste, der zweite und der dritte Behälter jeweils einen Einlass für erhitztes Regeneriergas aufweisen, der insbesondere bevorzugt durch den Auslass für das gereinigte Gas gebildet wird, der erste, der zweite und der dritte Behälter jeweils einen Auslass für beladenes, erhitztes Regeneriergas aufweisen, der insbesondere bevorzugt durch den Einlass für das zu reinigende Gas gebildet wird, und der Auslass für erwärmtes Regeneriergas des ersten Behälters mit dem Einlass für erhitztes Regeneriergas des zweiten Behälters verbunden ist, und/oder der Auslass für erwärmtes Regeneriergas des zweiten Behälters mit dem Einlass für erhitztes Regeneriergas des dritten Behälters verbunden ist und/oder der Auslass für erwärmtes Regeneriergas des dritten Behälters mit dem Einlass für erhitztes Regeneriergas des ersten Behälters verbunden ist.

## Beschreibung

Die Erfindung betrifft eine Vorrichtung zur Temperaturwechsel-Adsorption mit einem ersten Behälter und einem zweiten Behälter und einem dritten Behälter, bei der der erste, der zweite und der dritte Behälter jeweils zumindest ein Adsorptionsmittel aufweisen, das für die Temperaturwechsel-Adsorption geeignet ist. Ferner betrifft die Erfindung ein Verfahren zur Temperaturwechsel-Adsorption und Verwendungen für die erfindungsgemäße Vorrichtung und das erfindungsgemäße Verfahren.

Aus der Praxis sind Verfahren zur Trennung von Gasgemischen unter Druck mittels Adsorption bekannt. Diese Verfahren werden häufig auch als Druckwechsel-Adsorption (PSA; pressure swing adsorption) bezeichnet. Im Rahmen dieser Verfahren werden spezielle poröse Materialien, wie beispielsweise Zeolite oder Aktivkohle, als Adsorbens eingesetzt. Dabei werden die porösen Materialien in einem Behälter vorgesehen, der von dem zu reinigenden Gas durchströmt wird. Im Rahmen der PSA kann die Trennwirkung auf zwei verschiedenen Prinzipien beruhen. Die Trennung erfolgt entweder aufgrund der Gleichgewichts-Adsorption oder der Trennung aufgrund der Molekularsiebwirkung. Bei der Gleichgewichts-Adsorption wird eine der zu trennenden Komponenten stärker adsorbiert als eine andere, wodurch eine Anreichung der schlechter adsorbierten Komponente in der Gasphase stattfindet. Beim zweiten Prinzip durchdringen bestimmte Moleküle schneller die poröse Struktur des Adsorbens. Dadurch benötigt die Komponente, die schlechter in die Poren eindringt, weniger Zeit, um an dem Adsorbens vorbeizuströmen und gelangt somit eher zum Ausgang des Adsorbens als eine andere Komponente. Bei der PSA wird das Gas unter erhöhtem Druck (meist 6 bis 10 bar) in einen Festbettreaktor, der mit dem Adsorbens gefüllt ist, eingeleitet. Eine oder mehrere Komponenten des Gemischs werden von dem Adsorbens adsorbiert. Nach einer Weile ist das Adsorberbett weitestgehend gesättigt. An diesem Punkt wird über Ventile der Prozess so umgeschaltet, dass der Auslass für das gereinigte Gas am Behälter geschlossen wird und ein Auslass für die adsorbierte Komponente geöffnet wird. Dies ist von einer Druckabsenkung begleitet. Bei dem niedrigeren Druck wird das adsorbierte Gas wieder desorbiert und kann am Auslass für das adsorbierte Gas abgeführt werden. Für einen kontinuierlichen Betrieb sind zwei wechselseitig be- und entladene Adsorber vorgesehen. Nachteilig an der PSA ist die Notwendigkeit der Bereitstellung von mechanischer Energie, um das zu reinigende Gas auf den erhöhten Druck zu bringen.

Als Alternative zur PSA ist ein Verfahren zur Trennung von Gasgemischen unter Einsatz thermischer Energie mittels Adsorption bekannt, das auch als Temperaturwechsel-Adsorption (TSA-temperatur swing adsorption) bekannt ist. Dieses Verfahren macht sich die Temperaturabhängigkeit der Adsorption zunutze. Das Adsorbens wird mit der abzutrennenden Komponente beladen und in einem Folgeschritt mittels Einbringen thermischer Energie von dieser Komponente weitgehend befreit. Für den kontinuierlichen Betrieb einer TSA-Vorrichtung sind somit zwei Adsorber notwendig. Der erste Adsorber wird beladen, während der weitere Adsorber parallel dazu desorbiert wird. Die Desorption (Regenerierung) erfolgt mit einem erhitzten Regeneriergas. Zum Erhitzen des Regeneriergases wird im Stand der Technik Wasserdampf oder elektrische Energie verwendet. Im Gegensatz zur PSA benötigt die TSA thermische Energie, die jedoch weniger kostenintensiv ist als die mechanische Energie, die für den Druckaufbau im Rahmen der PSA notwendig ist. Dadurch kann die TSA auch bei Stoffsystemen mit hohen Adsorptionsenthalpien eingesetzt werden. Die Taktzeiten der TSA betragen in der Regel mehrere Stunden.

Vor diesem Hintergrund lag der Erfindung die Aufgabe zugrunde, eine Vorrichtung und ein Verfahren sowie Verwendungen vorzuschlagen, bei der eine Temperaturwechsel-Adsorption mit geringem Energieeinsatz durchgeführt werden kann.

Diese Aufgabe wird durch die Gegenstände der Patentansprüche 1, 2, 11 und 17 gelöst. Vorteilhafte Ausführungsformen des erfindungsgemäßen Verfahrens und der erfindungsgemäßen Vorrichtung sind Gegenstand der abhängigen Patentansprüche und der hiernach folgenden Beschreibung.

Die Erfindung geht von dem Grundgedanken aus, parallel zu dem ersten Behälter, in dem das zu reinigende Gas gereinigt wird, nicht nur einen zweiten Behälter vorzusehen, der desorbiert (regeneriert) wird, sondern einen zweiten und einen dritten Behälter vorzusehen und die Energie, die während eines Durchströmens mit einem erhitzten Regeneriergases während der Desorption in das Adsorptionsmittel eingebracht wird, für das Erhitzen des Regeneriergases zu verwenden. Bei dem weiteren Behälter handelt es sich somit um einen Behälter, dessen Adsorptionsmittel zwar bereits durch Durchströmen eines erhitzten Regeneriergases regeneriert ist, bei dem sich das Adsorptionsmittel jedoch noch auf einem höheren Temperaturniveau befindet, als es für den Einsatz zum Reinigen des Gases haben soll. Dieser Behälter mit regeneriertem, aber noch zu heißem Adsorptionsmittel wird bei der erfindungsgemäßen Vorrichtung und dem erfindungsgemäßen Verfahren von dem Regeneriergas durchströmt, das für das Regenerieren des Behälters mit zu regenerierendem Adsorptionsmittel eingesetzt wird.

Die Vorrichtung zur Temperaturwechsel-Adsorption weist einen ersten Behälter und einen zweiten Behälter und einen dritten Behälter auf. Der erste Behälter weist ein Adsorptionsmittel auf, das für die Temperaturwechsel-Adsorption geeignet ist. Ebenso weist der zweite Behälter ein Adsorptionsmittel auf, das für die Temperaturwechsel-Adsorption geeignet ist. Und auch der dritte Behälter weist ein Adsorptionsmittel auf, das für die Temperaturwechsel-Adsorption geeignet ist.

Ziel der Durchführung einer Temperaturwechsel-Adsorption ist es, einen Stoff aus einem Gas zu entfernen. In der Fachsprache hat sich teilweise eine sprachliche Differenzierung herausgebildet, bei der das Entfernen von Wasser aus dem Gas als "Trocknen" bezeichnet wird und das Entfernen anderen Stoffe als Wasser als "Reinigen" bezeichnet wird. Um die Beschreibung der vorliegenden Erfindung zu vereinfachen, wird in der Beschreibung dieser Erfindung für das Entfernen eines Stoffes aus einem Gas der Begriff "Reinigen" verwendet, ohne zwischen dem Entfernen von Wasser oder dem Entfernen anderer Stoffe als Wasser zu unterscheiden. Die Verwendung des Begriffs "Reinigen" in der Beschreibung schließt somit auch den teilweise in der Fachsprache verwendeten Begriff "Trocknen" ein. Das "Reinigen" mit der erfindungsgemä0ßen Vorrichtung und dem erfindungsgemäßen Verfahren kann in einer ersten Ausführungsform in dem vornehmlichen Entfernen von Wasser allein liegen. Das "Reinigen" mit der erfindungsgemäßen Vorrichtung und dem erfindungsgemäßen Verfahren kann in einer zweiten Ausführungsform in dem vornehmlichen Entfernen eines anderen Stoffes als Wasser allein liegen. Das "Reinigen" mit der erfindungsgemäßen Vorrichtung und dem erfindungsgemäßen Verfahren kann in einer dritten Ausführungsform in dem Entfernen von Wasser und einem anderen Stoff als Wasser liegen. Das zu verwendende Adsorptionsmittel wird je nach der durchzuführenden Reinigungsaufgabe gewählt. Soll beispielsweise vornehmlich Wasser aus Erdgas entfernt werden, so wird ein Adsorptionsmittel gewählt, das sehr affin für Wasser ist, aber möglicherweise nicht so affin für andere Stoffe, wie bspw. CO. Es sind auch Kombinationen von Adsorptionsmitteln in den jeweiligen Behälter denkbar. So kann der Behälter
- in einer ersten Ausführungsform (vorzugsweise nur) ein Adsorptionsmittel, das Wasser entfernt, aber einen anderen Stoff als Wasser in nicht nennenswertem Umfang, und ein Adsorptionsmittel, das Wasser in nicht nennenswertem Umfang aber einen anderen Stoff als Wasser aus dem Gas entfernt, enthalten, oder
- in einer zweiten Ausführungsform (vorzugsweise nur) ein Adsorptionsmittel, das Wasser in nicht nennenswertem Umfang aber einen anderen Stoff als Wasser aus dem Gas entfernt, und ein Adsorptionsmittel, das Wasser aus dem Gas entfernt, aber einen anderen Stoff als Wasser in nicht nennenswertem Umfang, enthalten, oder
- in einer dritten Ausführungsform (vorzugsweise nur) ein Adsorptionsmittel, das Wasser aus dem Gas entfernt, aber einen anderen Stoff als Wasser in nicht nennenswertem Umfang und ein Adsorptionsmittel, das Wasser und einen anderen Stoff als Wasser aus dem Gas entfernt, enthalten, oder
- in einer vierten Ausführungsform (vorzugsweise nur) ein Adsorptionsmittel, das Wasser aus dem Gas entfernt, aber einen anderen Stoff als Wasser in nicht nennenswertem Umfang und ein Adsorptionsmittel, das Wasser in nicht nennenswertem Umfang aber einen anderen Stoff aus dem Gas entfernt, und ein Adsorptionsmittel, das Wasser und einen anderen Stoff als Wasser aus dem Gas entfernt, enthalten.

Der Behälter kann beispielsweise ein Molekularsieb aufweisen oder aus mehreren Schichten bestehen, z.B. aus einer Schicht aus Silicagel und als weitere Schicht ein Molekularsieb in dem Behälter aufweisen. Ebenso kann ein Alugel verwendet werden.

Als Regeneriergas wird insbesondere bevorzugt Stickstoff oder Waste-Gas aus der Luftzerlegung genutzt. Es ist aber auch denkbar, als Regeneriergas einen Teilstrom des gereinigten Gases zu verwenden. Allgemein können als Regeneriergas alle Gase verwendet werden, die den zu entfernenden Stoff nicht oder nur in geringem Umfang enthalten.

In einer bevorzugten Ausführungsform weisen der erste, der zweite und der dritte Behälter das gleiche Adsorptionsmittel bzw. die gleiche Kombination von Adsorptionsmitteln auf.

Der Grundgedanke der Erfindung lässt sich mit einer Vorrichtung mit drei Behältern realisieren. Einer der Behälter reinigt in dem jeweiligen Betriebszustand das Gas, während gleichzeitig ein anderer Behälter (der in dem vorherigen Betriebszustand zum Reinigen verwendet wurde) mit erhitztem Regeneriergas regeneriert wird und ein dritter Behälter (der in dem vorherigen Betriebszustand mit erhitztem Regeneriergas regeneriert wurde) zum Erwärmen des Regeneriergases verwendet wird. Bei der Umsetzung der Erfindung mit drei Behältern werden die Behälter so durchgeschaltet, dass der Behälter, der in dem jeweiligen Betriebszustand zum Erwärmen des Regeneriergases verwendet wurde, im nächsten Betriebszustand zum Reinigen des Gases verwendet wird. Es sind jedoch auch Ausführungsformen mit mehr als drei Behältern denkbar. In diesen Ausführungsformen befinden sich die überzähligen Behälter, also die Behälter, die in dem jeweiligen Betriebszustand nicht zum Reinigen des Gases oder zum Erwärmen des Regeneriergases verwendet werden oder mit erhitztem Regeneriergas regeneriert werden müssen, in einem Stand-by. Bei der Umsetzung der Erfindung mit mehr als drei Behältern werden die Behälter so durchgeschaltet, dass der Behälter, der in dem jeweiligen Betriebszustand zum Erwärmen des Regeneriergases verwendet wurde, im nächsten Betriebszustand in den Stand-by geschaltet wird und ein sich derzeit im Stand-by befindlicher Behälter im nächsten Betriebszustand zum Reinigen des Gases verwendet wird.

Bei der erfindungsgemäßen Vorrichtung weist der erste Behälter einen Einlass für das zu reinigende Gas und einen Auslass für das gereinigte Gas auf. In einer bevorzugten Ausführungsform ist der Einlass für das zu reinigende Gas an dem ersten Behälter unterhalb des Einlasses für das gereinigte Gas angeordnet. In einer bevorzugten Ausführungsform ist bei dem ersten Behälter der Einlass für das zu reinigende Gas am unteren Ende des Behälters angeordnet und der Auslass für das gereinigte Gas am oberen Ende des Behälters angeordnet, so dass das zu reinigende Gas den ersten Behälter von unten nach oben durchströmt.

Bei der erfindungsgemäßen Vorrichtung weist der zweite Behälter einen Einlass für das zu reinigende Gas und einen Auslass für das gereinigte Gas auf. In einer bevorzugten Ausführungsform ist der Einlass für das zu reinigende Gas an dem zweiten Behälter unterhalb des Einlasses für das gereinigte Gas angeordnet. In einer bevorzugten Ausführungsform ist bei dem zweiten Behälter der Einlass für das zu reinigende Gas am unteren Ende des Behälters angeordnet und der Auslass für das gereinigte Gas am oberen Ende des Behälters angeordnet, so dass das zu reinigende Gas den zweiten Behälter von unten nach oben durchströmt.

Bei der erfindungsgemäßen Vorrichtung weist der dritte Behälter einen Einlass für das zu reinigende Gas und einen Auslass für das gereinigte Gas auf. In einer bevorzugten Ausführungsform ist der Einlass für das zu reinigende Gas an dem dritten Behälter unterhalb des Einlasses für das gereinigte Gas angeordnet. In einer bevorzugten Ausführungsform ist bei dem dritten Behälter der Einlass für das zu reinigende Gas am unteren Ende des Behälters angeordnet und der Auslass für das gereinigte Gas am oberen Ende des Behälters angeordnet, so dass das zu reinigende Gas den dritten Behälter von unten nach oben durchströmt.

Bei der erfindungsgemäßen Vorrichtung weist der erste Behälter einen Einlass für kühles Regeneriergas auf. In einer bevorzugten Ausführungsform wird der Einlass für kühles Regeneriergas durch den Einlass für das gereinigte Gas gebildet. Auf diese Weise kann die Anzahl der Öffnungen an dem Behälter reduziert werden. Bei der erfindungsgemäßen Vorrichtung weist der zweite Behälter einen Einlass für kühles Regeneriergas auf. In einer bevorzugten Ausführungsform wird der Einlass für kühles Regeneriergas durch den Einlass für das gereinigte Gas gebildet. Auf diese Weise kann die Anzahl der Öffnungen an dem Behälter reduziert werden. Bei der erfindungsgemäßen Vorrichtung weist der dritte Behälter einen Einlass für kühles Regeneriergas auf. In einer bevorzugten Ausführungsform wird der Einlass für kühles Regeneriergas durch den Einlass für das gereinigte Gas gebildet. Auf diese Weise kann die Anzahl der Öffnungen an dem Behälter reduziert werden.

Bei der erfindungsgemäßen Vorrichtung weist der erste Behälter einen Auslass für erwärmtes Regeneriergas auf. In einer bevorzugten Ausführungsform wird der Auslass für erwärmtes Regeneriergas durch den Auslass für das gereinigte Gas gebildet. Dadurch kann die Anzahl der Öffnungen an dem Behälter reduziert werden. Bei der erfindungsgemäßen Vorrichtung weist der zweite Behälter einen Auslass für erwärmtes Regeneriergas auf. In einer bevorzugten Ausführungsform wird der Auslass für erwärmtes Regeneriergas durch den Auslass für das gereinigte Gas gebildet. Dadurch kann die Anzahl der Öffnungen an dem Behälter reduziert werden. Bei der erfindungsgemäßen Vorrichtung weist der dritte Behälter einen Auslass für erwärmtes Regeneriergas auf. In einer bevorzugten Ausführungsform wird der Auslass für erwärmtes Regeneriergas durch den Auslass für das gereinigte Gas gebildet. Dadurch kann die Anzahl der Öffnungen an dem Behälter reduziert werden.

Bei der erfindungsgemäßen Vorrichtung weist der erste Behälter einen Einlass für erhitztes Regeneriergas auf. In einer bevorzugten Ausführungsform wird der Einlass für erhitztes Regeneriergas durch den Auslass für das gereinigte Gas gebildet. Dadurch kann die Zahl der Öffnungen an dem Behälter reduziert werden. Bei der erfindungsgemäßen Vorrichtung weist der zweite Behälter einen Einlass für erhitztes Regeneriergas auf. In einer bevorzugten Ausführungsform wird der Einlass für erhitztes Regeneriergas durch den Auslass für das gereinigte Gas gebildet. Dadurch kann die Zahl der Öffnungen an dem Behälter reduziert werden. Bei der erfindungsgemäßen Vorrichtung weist der dritte Behälter einen Einlass für erhitztes Regeneriergas auf. In einer bevorzugten Ausführungsform wird der Einlass für erhitztes Regeneriergas durch den Auslass für das gereinigte Gas gebildet. Dadurch kann die Zahl der Öffnungen an dem Behälter reduziert werden.

Bei der erfindungsgemäßen Vorrichtung weist der erste Behälter einen Auslass für beladenes, erhitztes Regeneriergas auf. In einer bevorzugten Ausführungsform wird der Auslass für beladenes, erhitztes Regeneriergas durch den Einlass für das zu reinigende Gas gebildet. Dadurch kann die Anzahl der Öffnungen an dem Behälter reduziert werden. Bei der erfindungsgemäßen Vorrichtung weist der zweite Behälter einen Auslass für beladenes, erhitztes Regeneriergas auf. In einer bevorzugten Ausführungsform wird der Auslass für beladenes, erhitztes Regeneriergas durch den Einlass für das zu reinigende Gas gebildet. Dadurch kann die Anzahl der Öffnungen an dem Behälter reduziert werden. Bei der erfindungsgemäßen Vorrichtung weist der dritte Behälter einen Auslass für beladenes, erhitztes Regeneriergas auf. In einer bevorzugten Ausführungsform wird der Auslass für beladenes, erhitztes Regeneriergas durch den Einlass für das zu reinigende Gas gebildet. Dadurch kann die Anzahl der Öffnungen an dem Behälter reduziert werden.

In einer bevorzugten Ausführungsform ist der erste Behälter ein Behälter mit einem hohlzylinderförmigen Mittelteil, einem Fußteil und einem Kopfteil, insbesondere bevorzugt mit einem deckelförmig ausgeführten Fußteil und/oder einem deckelförmig ausgeführten Kopfteil. Insbesondere bevorzugt hat der Fußteil die Form eines Kugelabschnitts, einer Kugelschicht oder eines Kugelausschnitts; der Fußteil kann aber auch durch einen flachen Deckel gebildet werden, der den hohlzylinderförmigen Mittelteil des Behälters am unteren Ende verschließt. Insbesondere bevorzugt hat der Kopfteil die Form eines Kugelabschnitts, einer Kugelschicht oder eines Kugelausschnitts; der Kopfteil kann aber auch durch einen flachen Deckel gebildet werden, der den hohlzylinderförmigen Mittelteil des Behälters am oberen oder unteren Ende verschließt. Insbesondere bevorzugt ist am höchsten Punkt des Kopfteils eine Öffnung vorgesehen, insbesondere bevorzugt der Auslass für gereinigtes Gas. Insbesondere bevorzugt ist am untersten Punkt des Fußteils eine Öffnung vorgesehen, insbesondere bevorzugt der Einlass für das zu reinigende Gas. Es sind aber auch Ausführungsformen denkbar, bei denen die Öffnung nicht am obersten oder untersten Punkt angeordnet ist. Je nach Anordnung der Behälter in der Anlage kann eine Öffnung auch seitlich an dem Fußoder Kopfteil oder sogar seitlich am Mittelteil ausgeführt sein.

In einer bevorzugten Ausführungsform sind alle Behälter der Vorrichtung, die zum Reinigen des Gases eingesetzt werden, gleich ausgeführt.

Die so ausgeführte erfindungsgemäße Vorrichtung mit drei Behältern kann in insgesamt drei allgemeinen Betriebszuständen betrieben werden. In einem ersten Betriebszustand durchströmt das zu reinigende Gas den ersten Behälter, wird also dem ersten Behälter über den Einlass für das zu reinigende Gas zugeführt, durchströmt das in dem ersten Behälter befindliche Adsorptionsmittel und wird über den Auslass für das gereinigte Gas des ersten Behälters aus dem ersten Behälter abgeführt. Gleichzeitig wird (kühles) Regeneriergas dem zweiten Behälter über den Einlass für kühles Regeneriergas zugeführt. Das kühle Regeneriergas durchströmt das Adsorptionsmittel in dem zweiten Behälter und wird dabei erwärmt und verlässt den zweiten Behälter am Auslass für erwärmtes Regeneriergas als erwärmtes Regeneriergas. Dem dritten Behälter wird über seinen Einlass für erhitztes Regeneriergas erhitztes Regeneriergas zugeführt. Das erhitzte Regeneriergas durchströmt das Adsorptionsmittel im dritten Behälter und wird dabei beladen und verlässt den dritten Behälter als beladenes, erhitztes Regeneriergas über den Auslass für beladenes, erhitztes Regeneriergas. In einem zweiten Betriebszustand durchströmt das zu reinigende Gas den zweiten Behälter, wird also dem zweiten Behälter über den Einlass für das zu reinigende Gas zugeführt, durchströmt das in dem zweiten Behälter befindliche Adsorptionsmittel und wird über den Auslass für das gereinigte Gas des zweiten Behälters aus dem zweiten Behälter abgeführt. Gleichzeitig wird (kühles) Regeneriergas dem dritten Behälter über den Einlass für kühles Regeneriergas zugeführt. Das kühle Regeneriergas durchströmt das Adsorptionsmittel in dem dritten Behälter und wird dabei erwärmt und verlässt den dritten Behälter am Auslass für erwärmtes Regeneriergas als erwärmtes Regeneriergas. Dem ersten Behälter wird über seinen Einlass für erhitztes Regeneriergas erhitztes Regeneriergas zugeführt. Das erhitzte Regeneriergas durchströmt das Adsorptionsmittel im ersten Behälter und wird dabei beladen und verlässt den ersten Behälter als beladenes, erhitztes Regeneriergas über den Auslass für beladenes, erhitztes Regeneriergas. In einem dritten Betriebszustand durchströmt das zu reinigende Gas den dritten Behälter, wird also dem dritten Behälter über den Einlass für das zu reinigende Gas zugeführt, durchströmt das in dem dritten Behälter befindliche Adsorptionsmittel und wird über den Auslass für das gereinigte Gas des dritten Behälters aus dem dritten Behälter abgeführt. Gleichzeitig wird (kühles) Regeneriergas dem ersten Behälter über den Einlass für kühles Regeneriergas zugeführt. Das kühle Regeneriergas durchströmt das Adsorptionsmittel in dem ersten Behälter und wird dabei erwärmt und verlässt den ersten Behälter am Auslass für erwärmtes Regeneriergas als erwärmtes Regeneriergas. Dem zweiten Behälter wird über seinen Einlass für erhitztes Regeneriergas erhitztes Regeneriergas zugeführt. Das erhitzte Regeneriergas durchströmt das Adsorptionsmittel im zweiten Behälter und wird dabei beladen und verlässt den zweiten Behälter als beladenes, erhitztes Regeneriergas über den Auslass für beladenes, erhitztes Regeneriergas.

Bei einer solchen Vorrichtung können die Vorteile der Erfindung, nämlich die Energieersparnis, bereits erreicht werden, wenn nur in einem der Betriebszustände das am Auslass für erwärmtes Regeneriergas ausströmende erwärmte Regeneriergas, insbesondere nach weiterem Erhitzen als erhitztes Regeneriergas über den Einlass für erhitztes Regeneriergas in einen anderen Behälter einströmt. Dann wird zumindest in diesem Betriebszustand die in einem Behälter mit regeneriertem, aber noch heißen Adsorptionsmittel aus einem vorherigen Betriebszustand gespeicherte Wärme genutzt, um das Regeneriergas zu erwärmen, das dann zum Regenerieren eines anderen Behälters in dem dann vorliegenden Betriebszustand genutzt wird. In einer bevorzugten Ausführungsform werden die durch die Erfindung bereitgestellten Vorteile jedoch maximiert und in jedem Betriebszustand die aus einem vorherigen Betriebszustand noch in einem Behälter vom Regenerieren des Adsorptionsmittel vorhandene Wärme genutzt, um das Regeneriergas zu erwärmen.

Es ist somit eine erste Ausführungsform der erfindungsgemäßen Vorrichtung denkbar, bei der nur der Auslass für erwärmtes Regeneriergas des ersten Behälters mit dem Einlass für erhitztes Regeneriergas des zweiten Behälters verbunden ist. Ebenso ist eine Ausführungsform denkbar, bei der nur der Auslass für erwärmtes Regeneriergas des zweiten Behälters mit dem Einlass für erhitztes Regeneriergas des dritten Behälters verbunden ist. Ebenso ist eine Ausführungsform denkbar, bei der nur der Auslass für erwärmtes Regeneriergas des dritten Behälters mit dem Einlass für erhitztes Regeneriergas des ersten Behälters verbunden ist. Die Vorteile der Erfindung werden jedoch besser genutzt, wenn bei einer Ausführungsform der erfindungsgemäßen Vorrichtung der Auslass für erwärmtes Regeneriergas des ersten Behälters mit dem Einlass für erhitztes Regeneriergas des zweiten Behälters verbunden ist und der Auslass für erwärmtes Regeneriergas des zweiten Behälters mit dem Einlass für erhitztes Regeneriergas des dritten Behälters verbunden ist. Ebenso werden die Vorteile der Erfindung besser genutzt, wenn bei einer Ausführungsform der Erfindung der Auslass für erwärmtes Regeneriergas des ersten Behälters mit dem Einlass für erhitztes Regeneriergas des zweiten Behälters verbunden ist und der Auslass für erwärmtes Regeneriergas des dritten Behälters mit dem Einlass für erhitztes Regeneriergas des ersten Behälters verbunden ist. Genauso werden die Vorteile der Erfindung besser benutzt, wenn in einer Ausführungsform der Erfindung der Auslass für erwärmtes Regeneriergas des zweiten Behälters mit dem Einlass für erhitztes Regeneriergas des dritten Behälters verbunden ist und der Auslass für erwärmtes Regeneriergas des dritten Behälters mit dem Einlass für erhitztes Regeneriergas des ersten Behälters verbunden ist. Die Vorteile der Erfindung werden maximal genutzt, wenn bei einer Ausführungsform der Erfindung der Auslass für erwärmtes Regeneriergas des ersten Behälters mit dem Einlass für erhitztes Regeneriergas des zweiten Behälters verbunden ist und der Auslass für erwärmtes Regeneriergas des zweiten Behälters mit dem Einlass für erhitztes Regeneriergas des dritten Behälters verbunden ist und der Auslass für erwärmtes Regeneriergas des dritten Behälters mit dem Einlass für erhitztes Regeneriergas des ersten Behälters verbunden ist. Diese Ausführungsform erlaubt es, in jedem Betriebszustand der Vorrichtung Wärme, die in dem in einem vorherigen Betriebszustand regenerierten Absorptionsmittel gespeichert ist, wieder zu verwenden.

Es ist denkbar, dass in einer Phase der Nutzung der erfindungsgemäßen Vorrichtung allein das am Auslass für erwärmtes Regeneriergas eines Behälters bereitgestellte erwärmte Regeneriergas als "erhitztes Regeneriergas" am Einlass für erhitztes Regeneriergas eines anderen Behälters zur Regeneration des Adsorptionsmittels in diesem Behälter genutzt wird. Das würde in diesem Betriebszustand zwar zu einer schlechteren Regeneration des Adsorptionsmittels führen, da durch Wärmeverluste das Regeneriergas, das beim Durchströmen eines Behälters, dessen Adsorptionsmittel in dem vorherigen Betriebszustand durch erhitztes Regeneriergas erhitzt wurde, erwärmt wird, nicht das gleiche Temperaturniveau erreichen wird, das ein im vorherigen Betriebszustand genutztes, erhitztes Regeneriergas in das Adsorptionsmittel eingebracht hat. Der dadurch entstandene Nachteil eines in dem vorliegenden Betriebszustand dann schlechter regenerierten Adsorptionsmittels mag je nach Aufgabenstellung in Kauf genommen werden oder dadurch kompensiert werden, dass über eine separate Leitung anderes Regeneriergas, das nicht von dem Auslass für erwärmtes Regeneriergas des jeweiligen Behälters stammt, und über einen Heizer erhitzt wurde, zusätzlich in den Behälter mit dem zu regenerierenden Absorptionsmittel eingeführt wird. Aus diesem Grund ist es denkbar, dass der Auslass für erwärmtes Regeneriergas des ersten Behälters ohne Zwischenschalten eines Heizers mit dem Einlass für erhitztes Regeneriergas des zweiten Behälters verbunden ist und/oder der Auslass für erwärmte Regeneriergas des zweiten Behälters ohne Zwischenschalten eines Heizers mit dem Einlass für erhitztes Regeneriergas des dritten Behälters verbunden ist und/oder der Auslass für erwärmtes Regeneriergas des dritten Behälters ohne Zwischenschalten eines Heizers mit dem Einlass für erhitztes Regeneriergas des ersten Behälters verbunden ist. In einer besonders bevorzugten Ausführungsform ist jedoch vorgesehen, dass der Auslass für erwärmtes Regeneriergas des ersten Behälters'unter Zwischenschalten eines Heizers mit dem Einlass für erhitztes Regeneriergas des zweiten Behälters verbunden ist und/oder der Auslass für erwärmtes Regeneriergas des zweiten Behälters unter Zwischenschalten eines Heizers mit dem Einlass für erhitztes Regeneriergas des dritten Behälters verbunden ist und/oder der Auslass für erwärmtes Regeneriergas des dritten Behälters unter Zwischenschalten eines Heizers mit dem Einlass für erhitztes Regeneriergas des ersten Behälters verbunden ist. Das Zwischenschalten eines Heizers erlaubt es, das Regeneriergas für das Regenerieren des Adsorptionsmittels ideal zu konditionieren, unabhängig von der Effektivität des Wärmetauschs beim Erwärmen des Regeneriergases, wenn es zum Erwärmen durch das im vorherigen Betriebszustand erhitzte Adsorptionsmittel in dem zuvor regenerierten Behälter strömt.

Als Heizer kommen insbesondere Elektroheizer oder Wärmetauscher in Betracht, wobei mittels der Wärmetauscher ein als Regeneriergas zu verwendendes Gas erwärmt wird. Das kann beispielsweise durch Wärmetausch mit ohnehin an dem Standort bzw. der Industrieanlage, an dem die erfindungsgemäße Vorrichtung bzw. das erfindungsgemäße Verfahren eingesetzt wird, befindlichem, heißen Fluid erfolgen, wie beispielsweise mit Wasserdampf, Heißwasser oder Thermoöl. In einem solchen Fall kann als Regeneriergas ein anderes Gas als das Fluid genommen werden, also beispielsweise als Regeneriergas Stickstoff. Es sind aber auch Umstände denkbar, bei denen an dem Standort bzw. der Industrieanlage, an dem die erfindungsgemäße Vorrichtung, bzw. das erfindungsgemäße Verfahren eingesetzt wird, ohnehin ein als Regeneriergas einsetzbares Gas in erhitzter Form anfällt. In solchen Fällen kann der Heizer entfallen und das ohnehin vorhandene, heiße Regeneriergas eingesetzt werden.

In einer bevorzugten Ausführungsform der erfindungsgemäßen Vorrichtung ist ein Leitungsnetz für Regeneriergas vorgesehen. Dieses Leitungsnetz für Regeneriergas weist einen Regeneriergas-Einlass auf. Das Vorsehen eines solchen Leitungsnetzes für Regeneriergas bietet die Möglichkeit, die Anzahl der Regeneriergas-Einlässe zu reduzieren. Die Vorteile dieser Ausführungsform werden bereits erreicht, wenn nur zwei der drei Einlässe für kühles Regeneriergas der jeweiligen Behälter zusammengefasst werden, während der verbleibende Behälter einen eigenen Regeneriergas-Einlass aufweist. So ist eine Ausführungsform denkbar, bei der der Einlass für kühles Regeneriergas des ersten Behälters und der Einlass für kühles Regeneriergas des zweiten Behälters mit dem Einlass für Regeneriergas des Leitungsnetzes verbunden sind, während der Einlass für kühles Regeneriergas des dritten Behälters einen eigenen Regeneriergas-Anschluss aufweist. Ebenso ist eine Ausführungsform denkbar, bei der der Einlass für kühles Regeneriergas des zweiten Behälters und der Einlass für kühles Regeneriergas des dritten Behälters mit dem Einlass für Regeneriergas des Leitungsnetzes verbunden sind, während der Einlass für kühles Regeneriergas des ersten Behälters einen eigenen Regeneriergas-Anschluss aufweist. Ebenso ist eine Ausführungsform denkbar, bei der der Einlass für kühles Regeneriergas des ersten Behälters und der Einlass für kühles Regeneriergas des dritten Behälters mit dem Einlass für Regeneriergas des Leitungsnetzes verbunden sind, während der Einlass für kühles Regeneriergas des zweiten Behälters einen eigenen Regeneriergas-Anschluss aufweist.

In einer besonders bevorzugten Ausführungsform ist jedoch der Einlass für kühles Regeneriergas des ersten Behälters, der Einlass für kühles Regeneriergas des zweiten Behälters und der Einlass für kühles Regeneriergas des dritten Behälters mit dem Einlass für Regeneriergas des Leitungsnetzes verbunden. Es sind Ausführungsformen denkbar, bei denen der Regeneriergas-Einlass unmittelbar als Verteiler ausgeführt ist und der jeweils mit dem Regeneriergas-Einlass des Leitungsnetzes zu verbindende Einlass für kühles Regeneriergas eines Behälters über eine eigenständige Leitung unmittelbar mit dem Regeneriergas-Einlass verbunden ist. In einer solchen Ausführungsform kann in der jeweiligen Leitung ein Absperrventil vorgesehen sein. Die Anzahl der vorzusehenden Leitungen lässt sich jedoch dadurch reduzieren, dass das Leitungsnetz eine Sammelleitung aufweist, die von dem Regeneriergas-Einlass fortführt, wobei der jeweils mit dem Regeneriergas-Einlass zu verbindende Einlass für kühles Regeneriergas eines jeweiligen Behälters über eine Zuführleitung mit der Sammelleitung verbunden ist. In einer bevorzugten Ausführungsform ist in der jeweiligen Zuführleitung ein Absperrventil vorgesehen.

In einer bevorzugten Ausführungsform weist die Vorrichtung ein Sammelleitungsnetz für erwärmtes Regeneriergas auf. Dieses Sammelleitungsnetz kann eine Sammelleitung aufweisen und bietet die Möglichkeit, die Zahl der nötigen Verbindungen zwischen den Behältern zu reduzieren. Dabei können bereits Vorteile erreicht werden, wenn nur für einige der vorhandenen Behälter der Auslass für erwärmtes Regeneriergas bei einer Abfuhrleitung mit der Sammelleitung verbunden ist. So ist eine Ausführungsform denkbar, bei der der Auslass für erwärmtes Regeneriergas des ersten Behälters über eine Abfuhrleitung mit der Sammelleitung verbunden ist und der Auslass für erwärmtes Regeneriergas des zweiten Behälters über eine Abfuhrleitung mit der Sammelleitung verbunden ist. Ebenso ist eine Ausführungsform denkbar, bei der der Auslass für erwärmtes Regeneriergas des ersten Behälters über eine Abfuhrleitung mit der Sammelleitung verbunden ist und der Auslass für erwärmtes Regeneriergas des dritten Behälters über eine Abfuhrleitung mit der Sammelleitung verbunden ist. Ebenso ist eine Ausführungsform denkbar, bei der der Auslass für erwärmtes Regeneriergas des dritten Behälters über eine Abfuhrleitung mit der Sammelleitung verbunden ist und der Auslass für erwärmtes Regeneriergas des zweiten Behälters über eine Abfuhrleitung mit der Sammelleitung verbunden ist. Besonders bevorzugt ist jedoch der Auslass für erwärmtes Regeneriergas des ersten Behälters über eine Abfuhrleitung mit der Sammelleitung verbunden, der Auslass für erwärmtes Regeneriergas des zweiten Behälters über eine Abfuhrleitung mit der Sammelleitung verbunden und der Auslass für erwärmtes Regeneriergas des dritten Behälters über eine Abfuhrleitung mit der Sammelleitung verbunden. Dadurch lässt sich die Zahl der notwendigen Leitungen maximal reduzieren. In einer bevorzugten Ausführungsform ist in der jeweiligen Abfuhrleitung, die einen Auslass für erwärmtes Regeneriergas eines Behälters mit der Sammelleitung verbindet, ein Absperrventil vorgesehen.

Das Vorhandensein der Sammelleitung des Sammelleitungsnetzes für erwärmtes Regeneriergas kann auch für das Verbinden mit dem Einlass für erhitztes Regeneriergas des jeweiligen Behälters genutzt werden. Dabei können Vorteile bereits erzielt werden, wenn nur ein Einlass für erhitztes Regeneriergas eines Behälters mit der Sammelleitung verbunden ist. Größere Vorteile lassen sich jedoch erreichen, wenn die Einlässe für erhitztes Regeneriergas mehrerer Behälter mit der Sammelleitung verbunden werden. So ist eine Ausführungsform denkbar, bei der der Einlass für erhitztes Regeneriergas des ersten Behälters über eine Zuführleitung mit der Sammelleitung und der Einlass für erhitztes Regeneriergas des zweiten Behälters über eine Zuführleitung mit der Sammelleitung verbunden ist. Ebenso ist eine Ausführungsform denkbar, bei der der Einlass für erhitztes Regeneriergas des ersten Behälters über eine Zuführleitung mit der Sammelleitung und der Einlass für erhitztes Regeneriergas des dritten Behälters über eine Zuführleitung mit der Sammelleitung verbunden ist. Ebenso ist eine Ausführungsform denkbar, bei der der Einlass für erhitztes Regeneriergas des dritten Behälters über eine Zuführleitung mit der Sammelleitung und der Einlass für erhitztes Regeneriergas des zweiten Behälters über eine Zuführleitung mit der Sammelleitung verbunden ist.

In einer bevorzugten Ausführungsform ist jedoch der Einlass für erhitztes Regeneriergas des ersten Behälters über eine Zuführleitung mit der Sammelleitung verbunden, der Einlass für erhitztes Regeneriergas des zweiten Behälters über eine Zuführleitung mit der Sammelleitung verbunden und der Einlass für erhitztes Regeneriergas des dritten Behälters über eine Zuführleitung mit der Sammelleitung verbunden. Dadurch lassen sich die vorzusehenden Leitungen maximal reduzieren.

In einer bevorzugten Ausführungsform ist in der jeweiligen Zuführleitung, die einen Einlass für erhitztes Regeneriergas mit der Sammelleitung verbindet, ein Absperrventil vorgesehen.

Das Vorhandensein eines Sammelleitungsnetzes für erwärmtes Regeneriergas mit einer Sammelleitung lässt sich auch bei den Ausführungsformen der Vorrichtung, bei der ein oder mehrere Heizer zum Erhitzen eines erwärmten Regeneriergas auf ein erhitztes Regeneriergas vorgesehen sind, vorteilhaft nutzen. Das Vorhandensein der Sammelleitung ermöglicht es, die Anzahl der Heizer zu reduzieren. Dabei können die Vorteile der Erfindung bereits genutzt werden, wenn nur für zwei der vorhandenen drei Behälter die Auslässe für erwärmtes Regeneriergas in der Sammelleitung gesammelt werden und einem gemeinsam genutzten Heizer zugeführt werden. Die Vorteile dieser Ausführungsform werden jedoch dann maximiert, wenn der Auslass für erwärmtes Regeneriergas jedes Behälters über eine Abführleitung mit der Sammelleitung verbunden ist und in der Sammelleitung ein Heizer vorgesehen ist. Der Heizer ist dabei insbesondere bevorzugt an einer Stelle der Sammelleitung vorgesehen, die stromabwärts der Verbindungspunkte der jeweiligen Abführleitung mit der Sammelleitung liegt.

In einer bevorzugten Ausführungsform ist eine By-Pass-Leitung vorgesehen, die den Regeneriergas-Einlass mit der Sammelleitung verbindet. In einer bevorzugten Ausführungsform ist in der By-Pass-Leitung ein Absperrventil vorgesehen. In einer bevorzugten Ausführungsform, bei der in der Sammelleitung ein Heizer vorgesehen ist, mündet die By-Pass-Leitung stromaufwärts des Heizers in die Sammelleitung. In dieser bevorzugten Ausführungsform ist der Heizer stromabwärts der Mündung der By-Pass-Leitung in der Sammelleitung vorgesehen. Das Vorsehen der By-Pass-Leitung erlaubt es, zusätzliches Regeneriergas bei der Regeneration der Behälter zu verwenden bzw. zusätzliches erhitztes Regeneriergas bereitzustellen. Die Vorzüge der Erfindung beruhen darauf, die in dem Absorptionsmittel, das in dem vorherigen Betriebszustand regeneriert wurde, gespeicherte Wärme zu nutzen. Beim erstmaligen Anfahren der Anlage gibt es jedoch keinen Behälter, der bereits in einem vorherigen Betriebszustand erwärmtes Absorptionsmittel aufweist. Deshalb ist es beispielweise beim Anfahren der Anlage notwendig, zunächst Regeneriergas über eine By-Pass-Leitung zu der Sammelleitung zu führen, durch einen Heizer in der Sammelleitung zu erhitzen und dem Behälter, der zu regenerierendes Absorptionsmittel aufweist, am Einlass für erhitztes Regeneriergas als erhitztes Regeneriergas zur Verfügung zu stellen.

Das erfindungsgemäß vorgesehene Durchströmen eines Behälters mit regeneriertem Absorptionsmittel mit Regeneriergas von einem Einlass für kühles Regeneriergas zu einem Auslass für erwärmtes Regeneriergas dient unter anderem dazu, das regenerierte Absorptionsmittel in diesem Behälter zu kühlen, also auf Temperaturniveau zu senken, dass das Absorptionsmittel haben soll, um dann als nächstes für das Reinigen des Gases eingesetzt zu werden. Dabei sind Betriebsführungen denkbar, bei denen das regenerierte Absorptionsmittel, das durch das Durchströmen mit Regeneriergas unter Erwärmen des Regeneriergases gekühlt wird, das gewünschte Temperaturniveau erreicht, bevor die Regenerierungsphase in dem anderen Behälter abgeschlossen ist. Bei einer solchen Betriebsführung erlaubt es die By-Pass-Leitung den Behälter, der bis dahin noch zum Erwärmen des Regeneriergases genutzt wurde (indem das regenerierte Absorptionsmittel auf das gewünschte Temperarturniveau abgekühlt wurde), aus der Durchströmung mit Regeneriergas abzukoppeln und das für die weitere Regenerierung des Absorptionsmittels in dem anderen Behälter benötigte erhitzte Regeneriergas durch Zuführen von Regeneriergas von dem Regeneriergas-Einlass über die By-Pass-Leitung zu der Sammelleitung und durch Erhitzen mittels eines Heizers in der Sammelleitung als erhitztes Regeneriergas bereitzustellen. Die durch das Vorsehen der By-Pass-Leitung bereitgestellte Möglichkeit, den Behälter, in dem das Regeneriergas durch Durchströmen von regeneriertem aber erhitztem Absorptionsmittel erwärmt wurde, nicht mehr von Regeneriergas durchströmen zu lassen, bietet auch in der weiter unter beschriebenen Ausführungsvariante, bei der in diesem Behälter ein Druckaufbau stattfinden soll, Vorteile.

In einer bevorzugten Ausführungsform ist am Einlass für das zu reinigende Gas zumindest eines Behälters, vorzugsweise jedes Behälters, ein Temperatursensor zum Messen der Gastemperatur vorgesehen. Ergänzend oder alternativ ist in einer bevorzugten Ausführungsform am Einlass für das zu reinigende Gas zumindest eines Behälter, vorzugsweise jedes Behälters, ein Durchflussmesser vorgesehen. Ergänzend oder alternativ ist in einer bevorzugten Ausführungsform am Einlass für das zu reinigende Gas zumindest eines Behälters, vorzugsweise jedes Behälters, ein Druckmesser vorgesehen.

In einer bevorzugten Ausführungsform ist am Auslass für das gereinigte Gas zumindest eines Behälters, vorzugsweise jedes Behälters, ein Temperatursensor zum Messen der Gastemperatur vorgesehen. Ergänzend oder alternativ ist in einer bevorzugten Ausführungsform am Auslass für das gereinigte Gas zumindest eines Behälters, vorzugsweise jedes Behälters, ein Durchflussmesser vorgesehen. Ergänzend oder alternativ ist in einer bevorzugten Ausführungsform am Auslass für das gereinigte Gas zumindest eines Behälters, vorzugsweise jedes Behälters, ein Druckmesser vorgesehen.

In einer bevorzugten Ausführungsform ist am Einlass für kühles Regeneriergas zumindest eines Behälters, vorzugsweise jedes Behälters, ein Temperatursensor zum Messen der Gastemperatur vorgesehen. Ergänzend oder alternativ ist in einer bevorzugten Ausführungsform am Einlass für kühles Regeneriergas zumindest eines Behälters, vorzugsweise jedes Behälters, ein Durchflussmesser vorgesehen. Ergänzend oder alternativ ist in einer bevorzugten Ausführungsform am Einlass für kühles Regeneriergas zumindest eines Behälters, vorzugsweise jedes Behälters, ein Druckmesser vorgesehen.

In einer bevorzugten Ausführungsform ist am Auslass für erwärmtes Regeneriergas zumindest eines Behälters, vorzugsweise jedes Behälters, ein Temperatursensor zum Messen der Gastemperatur vorgesehen. Ergänzend oder alternativ ist in einer bevorzugten Ausführungsform am Auslass für erwärmtes Regeneriergas zumindest eines Behälters, vorzugsweise jedes Behälters, ein Durchflussmesser vorgesehen. Ergänzend oder alternativ ist in einer bevorzugten Ausführungsform am Auslass für erwärmtes Regeneriergas zumindest eines Behälters, vorzugsweise jedes Behälters, ein Druckmesser vorgesehen.

In einer bevorzugten Ausführungsform ist am Einlass für erhitztes Regeneriergas zumindest eines Behälters, vorzugsweise jedes Behälters, ein Temperatursensor zum Messen der Gastemperatur vorgesehen. Ergänzend oder alternativ ist in einer bevorzugten Ausführungsform am Einlass für erhitztes Regeneriergas zumindest eines Behälters, vorzugsweise jedes Behälters, ein Durchflussmesser vorgesehen. Ergänzend oder alternativ ist in einer bevorzugten Ausführungsform am Einlass für erhitztes Regeneriergas zumindest eines Behälters, vorzugsweise jedes Behälters, ein Druckmesser vorgesehen.

In einer bevorzugten Ausführungsform ist am Auslass für beladenes, erhitztes Regeneriergas zumindest eines Behälters, vorzugsweise jedes Behälters, ein Temperatursensor zum Messen der Gastemperatur vorgesehen. Ergänzend oder alternativ ist in einer bevorzugten Ausführungsform am Auslass für beladenes, erhitztes Regeneriergas zumindest eines Behälters, vorzugsweise jedes Behälters, ein Durchflussmesser vorgesehen. Ergänzend oder alternativ ist in einer bevorzugten Ausführungsform am Auslass für beladenes, erhitztes Regeneriergas zumindest eines Behälters, vorzugsweise jedes Behälters, ein Druckmesser vorgesehen.

In einer bevorzugten Ausführungsform ist am Regeneriergas-Einlass ein Temperatursensor zum Messen der Gastemperatur vorgesehen. Ergänzend oder alternativ ist in einer bevorzugten Ausführungsform am Regeneriergas-Einlass ein Durchflussmesser vorgesehen. Ergänzend oder alternativ ist in einer bevorzugten Ausführungsform am Regeneriergas-Einlass ein Druckmesser vorgesehen.

In einer bevorzugten Ausführungsform sieht die Erfindung einen Druckaufbau in dem Behälter vor, der regeneriertes Absorptionsmittel beinhaltet und der als nächstes für das Reinigen des Gases verwendet werden soll. In der Regel befindet sich das zu reinigende Gas auf einem höheren Druckniveau als das Regeneriergas. Das zu reinigende Gas hat beispielweise einen Druck im Bereich von 4 bar bis 20 bar, in manchen Ausführungsformen von über 70 bar, teilweise von mehr als 100 bar. Demgegenüber wird die Regeneration des Absorptionsmittels mit Regeneriergas auf einem Druckniveau von teilweise 1 bar über Umgebungsdruck oder im Bereich von 2, 3 oder 4 bar durchgeführt.

Damit beim Umschalten von einem Behälter, der in dem jeweiligen Betriebszustand für das Reinigen des Gases genutzt wurde, auf einen anderen Behälter, der nun zum Reinigen des Gases verwendet werden soll, der Druckabfall minimiert wird, ist es vorteilhaft, wenn der Behälter, der als nächstes für das Reinigen des Gases verwendet werden soll, bereits auf das Druckniveau gebracht wird, das das zu reinigende Gas hat. Das kann insbesondere dadurch erreicht werden, dass ein Teil des in dem jeweiligen Betriebszustand in dem einen Behälter gereinigten Gases abgezweigt und in den Behälter eingeführt wird, der als nächstes zum Reinigen des Gases verwendet werden soll. Dabei werden die Vorzüge der Erfindung bereits in gewissem Umfang erreicht, wenn dies nur in bestimmten Betriebssituationen erfolgt, also nur dann, wenn ein bestimmter Behälter das Gas reinigt und ein anderer bestimmter Behälter als nächstes für die Reinigung vorgesehen ist. So werden die Vorzüge dieser Ausführungsform bereits im gewissen Umfang erreicht, wenn nur der Auslass für das gereinigte Gas des ersten Behälters mit einem Einlass für gereinigtes Gas des zweiten Behälters verbunden ist. Ebenso werden die Vorteile dieser Ausführungsform zum gewissen Grad erreicht, wenn nur der Auslass für das gereinigte Gas des zweiten Behälters mit einem Einlass für gereinigtes Gas des dritten Behälters verbunden ist. Ebenso werden die Vorzüge der Erfindung bereits zum gewissen Grad erreicht, wenn der Auslass für das gereinigte Gas des dritten Behälters mit einem Einlass für gereinigtes Gas des ersten Behälters verbunden ist. Die Vorteile dieser Ausführungsform werden jedoch im größeren Maße realisiert, wenn der Auslass für das gereinigte Gas des ersten Behälters mit einem Einlass für gereinigtes Gas des zweiten Behälters und der Auslass für das gereinigte Gas des zweiten Behälters mit einem Einlass für gereinigtes Gas des dritten Behälters verbunden ist. Ebenso werden die Vorteile dieser Ausführungsform im größeren Maße realisiert, wenn der Auslass für das gereinigte Gas des ersten Behälters mit einem Einlass für gereinigtes Gas des zweiten Behälters und der Auslass für das gereinigte Gas des dritten Behälters mit einem Einlass für gereinigtes Gas des dritten Behälters verbunden ist. Ebenso werden die Vorteile dieser Ausführungsform im größeren Maße realisiert, wenn der Auslass für das gereinigte Gas des zweiten Behälters mit einem Einlass für gereinigtes Gas des zweiten Behälters und der Auslass für das gereinigte Gas des dritten Behälters mit einem Einlass für gereinigtes Gas des dritten Behälters verbunden ist. Die Vorteile dieser Ausführungsform werden maximiert, wenn der Auslass für das gereinigte Gas des ersten Behälters mit einem Einlass für gereinigtes Gas des zweiten Behälters verbunden ist und der Auslass für das gereinigte Gas des zweiten Behälters mit einem Einlass für gereinigtes Gas des dritten Behälters verbunden ist und der Auslass für gereinigtes Gas des dritten Behälters mit einem Einlass für gereinigtes Gas des ersten Behälters verbunden ist.

Besondere Vorteile des konstruktiven Aufbaus werden dabei dann erreicht, wenn bei einem Behälter, der als Behälter mit einem Einlass für gereinigtes Gas auszuführen ist, der Einlass für gereinigtes Gas durch den Auslass für gereinigtes Gas dieses Behälters ausgeführt wird. Somit kann diese Ausführungsform dadurch realisiert werden, dass der Auslass für das gereinigte Gas des ersten Behälters mit dem Auslass für gereinigtes Gas des zweiten Behälters verbunden ist und/oder der Auslass für gereinigtes Gas des zweiten Behälters mit dem Auslass für gereinigtes Gas des dritten Behälters verbunden ist und/oder der Auslass für das gereinigte Gas des dritten Behälters mit dem Auslass für gereinigtes Gas des ersten Behälters verbunden ist.

Die erfindungsgemäße Vorrichtung kann mit drei Behältern realisiert werden. Sie kann aber auch mit mehr als drei Behältern realisiert werden, beispielsweise mit vier oder mehr Behältern. Das Vorsehen eines vierten oder weiteren Behälters kann dazu genutzt werden, stets einen der Behälter der Vorrichtung während eines Betriebszustands im Stand-by zu halten, wobei als Stand-by insbesondere ein Zustand verstanden wird, bei dem der jeweilige Behälter nicht von zu reinigendem Gas und nicht von Regeneriergas (sei es zum Erwärmen des Regeneriergases oder sei es mit erhitztem Regeneriergas) durchströmt wird. Der Stand-by kann einerseits genutzt werden, um Wartungsarbeiten an dem Behälter durchzuführen, beispielsweise das Adsorptionsmittel auszutauschen, während die Anlage kontinuierlich weiter betrieben wird. Der Stand-by kann aber vor allem dazu genutzt werden, die Zeiten zu reduzieren, in denen ein Behälter für das Reinigen des Gases eingesetzt wird, ohne dabei die Zeit zu reduzieren, die für das Regenerieren des Behälters zur Verfügung steht. So kann beispielsweise von einem das Gas reinigenden Behälter auf einen im Stand-by befindlichen Behälter durchgeschaltet werden, der dann das Gas reinigt, selbst wenn sich andere Behälter noch in der Regenerationsphase befinden.

Die Erfindung sieht vor, dass der Behälter, der im vor-vorherigen Zustand das Gas gereinigt hat und der im vorherigen Zustand durch Durchströmen mit erhitztem Regeneriergas regeneriert wurde, dazu verwendet wird, das Regeneriergas zu erwärmen. Vergibt man Ordnungsziffern für die Behälter (erster Behälter, zweiter Behälter, dritter Behälter, vierter Behälter, nter-Behälter), so ist es für die Umsetzung der Erfindung in einer bevorzugten Ausführungsform zweckmäßig, dass der Auslass für erwärmtes Regeneriergas des (n-1)ten Behälters mit dem Einlass für erhitztes Regeneriergas des (n)ten Behälters verbunden ist und der Auslass für erwärmtes Regeneriergas des Behälters mit der höchsten Ordnungsziffer mit dem Einlass für erhitztes Regeneriergas des ersten Behälters verbunden ist.

In einer bevorzugten Ausführungsform weist die Vorrichtung ein Sammelleitungsnetz für beladenes, erhitztes Regeneriergas auf. Dieses Sammelleitungsnetz kann eine Sammelleitung aufweisen und bietet die Möglichkeit, die Zahl der nötigen Verbindungen zu reduzieren. Dabei können bereits Vorteile erreicht werden, wenn nur für einige der vorhandenen Behälter der Auslass für beladenes, erhitztes Regeneriergas über eine Abfuhrleitung mit der Sammelleitung verbunden ist. So ist eine Ausführungsform denkbar, bei der der Auslass für beladenes, erhitztes Regeneriergas des ersten Behälters über eine Abfuhrleitung mit der Sammelleitung verbunden ist und der Auslass für beladenes, erhitztes Regeneriergas des zweiten Behälters über eine Abfuhrleitung mit der Sammelleitung verbunden ist. Ebenso ist eine Ausführungsform denkbar, bei der der Auslass für beladenes, erhitztes Regeneriergas des ersten Behälters über eine Abfuhrleitung mit der Sammelleitung verbunden ist und der Auslass für beladenes, erhitztes Regeneriergas des dritten Behälters über eine Abfuhrleitung mit der Sammelleitung verbunden ist. Ebenso ist eine Ausführungsform denkbar, bei der der Auslass für beladenes, erhitztes Regeneriergas des dritten Behälters über eine Abfuhrleitung mit der Sammelleitung verbunden ist und der Auslass für beladenes, erhitztes Regeneriergas des zweiten Behälters über eine Abfuhrleitung mit der Sammelleitung verbunden ist. Besonders bevorzugt ist jedoch der Auslass für beladenes, erhitztes Regeneriergas des ersten Behälters über eine Abfuhrleitung mit der Sammelleitung verbunden, der Auslass für beladenes, erhitztes Regeneriergas des zweiten Behälters über eine Abfuhrleitung mit der Sammelleitung verbunden und der Auslass für beladenes, erhitztes Regeneriergas des dritten Behälters über eine Abfuhrleitung mit der Sammelleitung verbunden. Dadurch lässt sich die Zahl der notwendigen Leitungen maximal reduzieren. In einer bevorzugten Ausführungsform ist in der jeweiligen Abfuhrleitung, die einen Auslass für beladenes, erhitztes Regeneriergas eines Behälters mit der Sammelleitung verbindet, ein Absperrventil vorgesehen. Die Sammelleitung für beladenes, erhitztes Regeneriergas kann dazu verwendet werden, das beladene, erhitzte Regeneriergas aus der Vorrichtung herauszuführen, um es beispielsweise bei unkritischen oder erlaubten Gasen in die Atmosphäre abzuleiten oder in einen Prozess zurückzuführen oder als Brenngas zur Energiegewinnung einzusetzen oder über eine Fackel zu verbrennen.

Vorstehend wurde beschrieben, dass einzelne Öffnungen eines Behälters im bevorzugten Ausführungsformen mehrere Funktionen aufweisen können, dass beispielsweise der Einlass für kühles Regeneriergas durch den Einlass für das zu reinigende Gas gebildet werden kann oder der Auslass für erwärmtes Regeneriergas durch den Auslass für das gereinigte Gas gebildet werden kann oder der Einlass für erhitztes Regeneriergas durch den Auslass für das gereinigte Gas gebildet werden kann oder der Auslass für beladenes, erhitztes Regeneriergas durch den Einlass für das zu reinigende Gas gebildet werden kann oder ein Einlass für gereinigtes Gas durch den Auslass für gereinigtes Gas gebildet werden kann. Diese Mehrfachfunktionen einer Öffnung können beispielsweise durch Wechselventile in den Zu- bzw. Ableitungen zu den jeweiligen Öffnungen erreicht werden, bei denen je nach Stellung des Ventilkörpers die jeweilige Öffnung des Behälters mit einer ersten Leitung oder mit einer zweiten oder sogar mit einer dritten Leitung verbunden wird.

Das erfindungsgemäße Verfahren macht sich zunutze, dass ein erhitztes Regeneriergas in einem ersten Betriebszustand beim Regenerieren eines Adsorptionsmittels in einem Behälter Wärme in dieses Adsorptionsmittel einträgt, die in einem zweiten Betriebszustand zum Erhitzen eines Regeneriergases, das zum Regenerieren eines Adsorptionsmittels in einem anderen Behälter verwendet wird, beitragen kann. Dazu ist erfindungsgemäß vorgesehen, dass bei dem Verfahren zur Temperarturwechsel-Adsorption in einem ersten Betriebszustand
- das zu reinigende Gas über einen Einlass für das zu reinigende Gas eines ersten Behälters, der zumindest ein Adsorptionsmittel aufweist, das für die Temperaturwechsel-Adsorption geeignet ist, in den ersten Behälter eingeführt und nach Durchströmen des Adsorptionsmittels in dem ersten Behälter über einen Auslass für gereinigtes Gas aus dem ersten Behälter abgeführt wird,
- ein Regeneriergas erhitzt wird und über einen Einlass für erhitztes Regeneriergas eines dritten Behälters, der zumindest ein Adsorptionsmittel aufweist, das für die Temperaturwechsel-Adsorption geeignet ist, in den dritten Behälter eingeführt und nach Durchströmen des Adsorptionsmittels in den dritten Behälter als beladenes, erhitztes Regeneriergas über einen Auslass für beladenes, erhitztes Regeneriergas aus dem dritten Behälter abgeführt wird,
   und in einem zweiten Betriebszustand
- das zu reinigende Gas über einen Einlass für das zu reinigende Gas eines zweiten Behälters, der zumindest ein Adsorptionsmittel aufweist, das für die Temperaturwechsel-Adsorption geeignet ist, in den zweiten Behälter eingeführt und nach Durchströmen des Adsorptionsmittels in dem zweiten Behälter über einen Auslass für gereinigtes Gas aus dem zweiten Behälter abgeführt wird, oder das zu reinigende Gas über einen Einlass für das zu reinigende Gas eines vierten Behälters, der zumindest ein Adsorptionsmittel aufweist, das für die Temperaturwechsel-Adsorption geeignet ist, in den vierten Behälter eingeführt und nach Durchströmen des Adsorptionsmittels in den vierten Behälter über einen Auslass für gereinigtes Gas aus dem vierten Behälter abgeführt wird, während ein zweiter Behälter in einem Stand-by ist,
- ein Regeneriergas über einen Einlass für kühles Regeneriergas des dritten Behälters in den dritten Behälter eingeführt und nach Durchströmen des Adsorptionsmittels in den dritten Behälter als erwärmtes Regeneriergas über einen Auslass für erwärmtes Regeneriergas aus dem dritten Behälter abgeführt wird,
- das erwärmte Regeneriergas erhitzt wird und über einen Einlass für erhitztes Regeneriergas des ersten Behälters in den ersten Behälter eingeführt und nach Durchströmen des Adsorptionsmittels in den ersten Behälter als beladenes, erhitztes Regeneriergas über einen Auslass für beladenes, erhitztes Regeneriergas aus dem ersten Behälter abgeführt wird.

In einer bevorzugten Ausführungsform ist vorgesehen, dass vor einem Wechsel von dem ersten Betriebszustand in den zweiten Betriebszustand der Auslass für das gereinigte Gas des ersten Behälters geschlossen und der erste Behälter einer Druckentspannung unterzogen wird. Dabei kann zu diesem Zeitpunkt bereits das zu reinigende Gas über den Einlass für das zu reinigende Gas des zweiten Behälters in den zweiten Behälter eingeführt werden und nach Durchströmen des Adsorptionsmittels in den zweiten Behälter über ein Auslass für gereinigtes Gas aus dem zweiten Behälter abgeführt werden. Dadurch wird die Kontinuität der Reinigung des Gases gewährleistet.

In einer bevorzugten Ausführungsform wird somit zwischen dem ersten Betriebszustand und dem zweiten Betriebszustand ein Übergangsbetriebszustand zwischengeschaltet. In diesem Übergangsbetriebszustand wird das zu reinigende Gas über den Einlass für das zu reinigende Gas des zweiten Behälters in den zweiten Behälter eingeführt und nach Durchströmen des Adsorptionsmittels in den zweiten Behälter über einen Auslass für gereinigtes Gas aus dem zweiten Behälter abgeführt. Zudem ist in diesem Übergangsbetriebszustand der Auslass für das gereinigte Gas des ersten Behälters geschlossen und der erste Behälter wird einer Druckentspannung unterzogen. Die Druckentspannung des ersten Behälters kann beispielsweise dadurch erfolgen, dass ein Auslass für Gas an dem ersten Behälter geöffnet ist, der mit der Atmosphäre oder zumindest einem Leitungsnetz oder einem Sammelbehälter auf niedrigerem Druckniveau verbunden ist. Dieser Auslass für Gas des ersten Behälters kann der Einlass für das zu reinigende Gas des ersten Behälters oder - falls separat ausgebildet - der Einlass für kühles Regeneriergas des ersten Behälters oder - falls separat ausgebildet - der Auslass für beladenes, erhitztes Regeneriergas sein.

In einer bevorzugten Ausführungsform wird vor dem Wechsel von dem ersten Betriebszustand in den zweiten Betriebszustand das Regeneriergas aus dem zweiten Behälter entfernt. Hierzu kann ein Teil des über den Auslass für gereinigtes Gas aus dem ersten Behälter abgeführten gereinigten Gases über einen Einlass für gereinigtes Gas des zweiten Behälters in den zweiten Behälter einströmen und das in dem zweiten Behälter befindliche Regeneriergas verdrängen. Insbesondere erfolgt dies in einem dem oben stehend genannten Übergangsbetriebszustand vorgeschalteten vorbereitenden Betriebszustands. In diesem vorbereitenden Betriebszustand wird das zu reinigende Gas - wie auch im ersten Betriebszustand - über den Einlass für das zu reinigende Gas des ersten Behälters in den ersten Behälter eingeführt und nach Durchströmen des Absorptionsmittels in den ersten Behälter über einen Auslass für gereinigtes Gas aus dem ersten Behälter abgeführt. In diesem vorbereitenden Betriebszustand wird jedoch nicht mehr - wie in einer bevorzugten Ausführungsform des ersten Betriebszustand - das Regeneriergas über einen Einlass für kühles Regeneriergas des zweiten Behälters in den zweiten Behälter eingeführt und nach Durchströmen des Adsorptionsmittels in den zweiten Behälter als erwärmtes Regeneriergas über ein Auslass für erwärmtes Regeneriergas aus dem zweiten Behälter abgeführt (von wo aus es - ggf. nach weiterem Erhitzen - als erhitztes Regeneriergas über den Einlass für erhitztes Regeneriergas in den dritten Behälter einströmen kann). Vielmehr wird in diesem vorbereitenden Betriebszustand ein Auslass für Gas des zweiten Behälters, der vorzugsweise der Einlass für das zu reinigende Gas des zweiten Behälters sein kann, mit der Atmosphäre oder einem Sammelbehälter verbunden und ein Teil des über den Auslass für gereinigtes Gas aus dem ersten Behälter abgeführten gereinigten Gases über ein Einlass für gereinigtes Gas des zweiten Behälters in den zweiten Behälter eingeführt. Das abgezweigte, gereinigte Gas befindet sich oft in einer bevorzugten Ausführungsform auf einem höheren Druckniveau, als das in der bevorzugten Ausführungsform des ersten Betriebszustands durch den zweiten Behälter strömende Regeneriergas. Dadurch kann der zweite Behälter mit gereinigtem Gas gespült werden. Nachdem der zweite Behälter mit gereinigtem Gas gespült wurde, kann der Auslass für Gas des zweiten Behälters geschlossen werden. Durch das nach wie vor in den zweiten Behälter einströmende gereinigte Gas wird dabei der Innendruck des zweiten Behälters erhöht.

In einer bevorzugten Ausführungsform wird somit in dem vorbereitenden Betriebszustand zunächst der zweite Behälter durch gereinigtes Gas so gespült, dass sich in dem zweiten Behälter kein Regeneriergas mehr befindet. Erst dann werden die weiteren Öffnungen des zweiten Behälters geschlossen, so dass das fortgesetzte Einströmen von gereinigtem Gas über den Einlass für gereinigtes Gas in den zweiten Behälter zu einem Anstieg des Innendrucks in dem zweiten Behälter führt. Auf diesem Wege kann in dem vorbereitenden Betriebszustand der zweite Behälter von Regeneriergas befreit und mit gereinigtem Gas gefüllt werden sowie auf das Druckniveau des gereinigten Gases gebracht werden. Das führt dazu, dass beim Umschalten von dem vorbereitenden Betriebszustand auf den Übergangsbetriebszustand, bei dem das zu reinigende Gas nicht mit dem ersten Behälter, sondern nun dem zweiten Behälter zugeführt wird, das zu reinigende Gas in einen Behälter (den zweiten Behälter) strömt, der bereits gereinigtes Gas enthält und sich auf dem Druckniveau des zu reinigenden Gases befindet. Auf diese Weise wird sowohl ein Druckabfall in den Leitungen des zu reinigenden bzw. des gereinigten Gases vermieden, wie auch der Eintrag von Regeneriergas in das gereinigte Gas vermieden.

Die Vorzüge der Erfindung werden insbesondere dann erreicht, wenn so viele Betriebszustände vorgesehen werden, wie notwendig sind, um jeden der vorhandenen Behälter einmal eine der drei möglichen Zustände einnehmen zu lassen (Reinigen des Gases, Erwärmen des Regeneriergases, Regenerieren des Adsorptionsmittels).

In einer bevorzugten Ausführungsform ist deshalb ein dritter Betriebszustand vorgesehen, bei dem bei einer Durchführung des Verfahrens an einer Vorrichtung mit einem ersten, einem zweiten und einem dritten Behälter,
- das zu reinigende Gas über einen Einlass für das zu reinigende Gas eines dritten Behälters, in den dritten Behälter eingeführt und nach Durchströmen des Adsorptionsmittels in den dritten Behälter über einen Auslass für gereinigtes Gas aus dem dritten Behälter abgeführt wird,
- ein Regeneriergas über einen Einlass für kühles Regeneriergas des ersten Behälters in den ersten Behälter eingeführt und nach Durchströmen des Adsorptionsmittels in den ersten Behälter als erwärmtes Regeneriergas über einen Auslass für erwärmtes Regeneriergas aus dem ersten Behälter abgeführt wird,
- das erwärmte Regeneriergas erhitzt wird und über einen Einlass für erhitztes Regeneriergas des zweiten Behälters in den zweiten Behälter eingeführt und nach Durchströmen des Adsorptionsmittels in den zweiten Behälter als beladenes, erhitztes Regeneriergas über einen Auslass für beladenes, erhitztes Regeneriergas aus dem zweiten Behälter abgeführt wird.

In einer bevorzugten Ausführungsform ist ein weiterer Übergangsbetriebszustand vorgesehen, bei dem das zu reinigende Gas über den Einlass für das zu reinigende Gas des dritten Behälters in den dritten Behälter eingeführt und nach Durchströmen des Adsorptionsmittels in den dritten Behälter über einen Auslass für gereinigtes Gas aus dem dritten Behälter abgeführt wird. Zudem ist in diesem Übergangsbetriebszustand der Auslass für das gereinigte Gas des zweiten Behälters geschlossen und der zweite Behälter wird einer Druckentspannung unterzogen.

Ebenfalls ist in einer bevorzugten Ausführungsform ein weiterer vorbereitender Betriebszustand vorgesehen, der dem dritten Betriebszustand vorgeschaltet ist, bei dem der dritte Behälter durch gereinigtes Gas so gespült wird, bis sich in dem dritten Behälter kein Regeneriergas mehr befindet. Danach werden die weiteren Öffnungen des dritten Behälters geschlossen, so dass das fortgesetzte Einströmen von gereinigtem Gas über den Einlass für gereinigtes Gas in den dritten Behälter zu einem Anstieg des Innendrucks in dem dritten Behälter führt.

In einer bevorzugten Ausführungsform, bei der das Verfahren an einer Vorrichtung mit einem ersten, einem zweiten, einem dritten und einem vierten Behälter durchgeführt wird, kann vorgesehen sein, dass
- das zu reinigende Gas über einen Einlass für das zu reinigende Gas des zweiten Behälters, der in dem zweiten Zustand im Stand-by war, in den zweiten Behälter eingeführt und nach Durchströmen des Adsorptionsmittels in den zweiten Behälter über einen Auslass für gereinigtes Gas aus dem zweiten Behälter abgeführt wird, während der dritte Behälter im Stand-by ist,
- ein Regeneriergas über einen Einlass für kühles Regeneriergas des ersten Behälters in den ersten Behälter eingeführt und nach Durchströmen des Adsorptionsmittels in den ersten Behälter als erwärmtes Regeneriergas über einen Auslass für erwärmtes Regeneriergas aus dem ersten Behälter abgeführt wird,
- das erwärmte Regeneriergas erhitzt wird und über einen Einlass für erhitztes Regeneriergas des vierten Behälters in den vierten Behälter eingeführt und nach Durchströmen des Adsorptionsmittels in den vierten Behälter als beladenes, erhitztes Regeneriergas über einen Auslass für beladenes, erhitztes Regeneriergas aus dem vierten Behälter abgeführt wird.

In einer bevorzugten Ausführungsform wird das erfindungsgemäße Verfahren mit einer erfindungsgemäßen Vorrichtung bzw. insbesondere bevorzugt mit bevorzugten Ausführungsformen der erfindungsgemäßen Vorrichtung durchgeführt.

Die erfindungsgemäße Vorrichtung und/oder das erfindungsgemäße Verfahren finden insbesondere Anwendung bei der Erdgastrocknung und der Entfernung von Restgehalt von CO₂; ebenso finden sie Anwendung bei der CO₂-Trocknung und Entfernung von Methanol.

Nachfolgend wird die Erfindung anhand einer lediglich ein Ausführungsbeispiel der Erfindung darstellenden Zeichnungen näher erläutert. Darin zeigen:
- Fig. 1: den schematischen Aufbau einer erfindungsgemäßen Vorrichtung mit vier Behältern in einer Prinzipskizze;
- Fig. 2: eine schematische Darstellung eines ersten Betriebszustandes der erfindungsgemäßen Vorrichtung in einer Prinzipskizze, wobei die Figur nur die Leitungsabschnitte zeigt, die für die Umsetzung des Betriebszustands benötigt werden;
- Fig. 3: einen Teilzustand des ersten Betriebszustandes, bei dem das Regeneriergas nicht mehr durch den zweiten Behälter, sondern über eine By-Pass-Leitung geführt wird in einer Prinzipskizze, wobei die Figur nur die Leitungsabschnitte zeigt, die für die Umsetzung dieses Zustands benötigt werden;
- Fig. 4: eine erste Phase eines vorbereitenden Betriebszustands für das Umschalten von dem ersten Betriebszustand in einen Übergangsbetriebszustand in einer Prinzipskizze, wobei die Figur nur die Leitungsabschnitte zeigt, die für die Umsetzung dieses Zustands benötigt werden;
- Fig. 5: eine zweite Phase eines vorbereitenden Betriebszustands für das Umschalten von dem ersten Betriebszustand in einen Übergangsbetriebszustand in einer Prinzipskizze, wobei die Figur nur die Leitungsabschnitte zeigt, die für die Umsetzung dieses Zustands benötigt werden;
- Fig. 6: einen Übergangsbetriebszustand zwischen dem ersten Betriebszustand und einem zweiten Betriebszustand in einer Prinzipskizze, wobei die Figur nur die Leitungsabschnitte zeigt, die für die Umsetzung dieses Zustands benötigt werden;
- Fig. 7: eine schematische Darstellung eines zweiten Betriebszustandes der erfindungsgemäßen Vorrichtung in einer Prinzipskizze, wobei die Figur nur die Leitungsabschnitte zeigt, die für die Umsetzung des Betriebszustands benötigt werden;
- Fig. 8: einen Teilzustand des zweiten Betriebszustandes, bei dem das Regeneriergas nicht mehr durch den dritten Behälter, sondern über eine By-Pass-Leitung geführt wird in einer Prinzipskizze, wobei die Figur nur die Leitungsabschnitte zeigt, die für die Umsetzung dieses Zustands benötigt werden;
- Fig. 9: eine erste Phase eines vorbereitenden Betriebszustandes für das Umschalten von dem zweiten Betriebszustand in einen Übergangsbetriebszustand in einer Prinzipskizze, wobei die Figur nur die Leitungsabschnitte zeigt, die für die Umsetzung dieses Zustands benötigt werden;
- Fig. 10: eine zweite Phase eines vorbereitenden Betriebszustandes für das Umschalten von dem zweiten Betriebszustand in einen Übergangsbetriebszustand in einer Prinzipskizze, wobei die Figur nur die Leitungsabschnitte zeigt, die für die Umsetzung dieses Zustands benötigt werden, und
- Fig. 11: schematisch mit Symbolen die Zustände der vier Behälter im ersten Betriebszustand, zweiten Betriebszustand, dritten Betriebszustand und im vierten Betriebszustand.

Die erfindungsgemäße Vorrichtung weist einen ersten Behälter 1, einen zweiten Behälter 2, einen dritten Behälter 3 und einen vierten Behälter 4 auf. In dem ersten, zweiten, dritten und dem vierten Behälter ist jeweils ein (nicht näher dargestelltes) Absorptionsmittel enthalten, das für die Temperaturwechsel-Absorption geeignet ist. Beispielsweise ist in jedem der Behälter ein Alugel oder Silicagel zur Entfernung von Wasser als Eingangsschicht und ein Molekularsieb zur Entfernung eines weiteren Stoffes vorgesehen. Der Innenaufbau der Behälter 1 bis 4 ist identisch.

Jeder Behälter weist eine obere Öffnung 5 und eine untere Öffnung 6 auf. Die obere Öffnung 5 wird je nach Betriebszustand, in dem sich der jeweilige Behälter gerade befindet, als Auslass für das gereinigte Gas, als Auslass für erwärmtes Regeneriergas, als Einlass für erhitztes Regeneriergas, als Einlass für gereinigtes Gas verwendet. Die untere Öffnung 6 wird je nach Betriebszustand, in dem sich der jeweilige Behälter befindet, als Einlass für das zu reinigende Gas, als Einlass für kühles Regeneriergas, oder als Auslass für beladenes, erhitztes Regeneriergas verwendet.

Die Vorrichtung weist einen Einlass 7 für das zu reinigende Gas auf. Von dem Einlass 7 für das zu reinigende Gas führt eine Sammelleitung 8 fort. Von der Sammelleitung 8 führt jeweils eine Zufuhrleitung 9 zu der unteren Öffnung 6 des jeweiligen Behälters 1 bis 4, so dass der Einlass für das zu reinigende Gas des jeweiligen Behälters 1 bis 4 (gebildet durch die untere Öffnung 6) mit dem Einlass 7 für das zu reinigende Gas verbunden ist. In jeder Zufuhrleitung 9 befindet sich ein Absperrventil 10.

Die Vorrichtung weist einen Auslass 11 für gereinigtes Gas auf. Stromaufwärts des Auslasses 11 für gereinigtes Gas ist eine Sammelleitung 12 vorgesehen. Der Auslass für gereinigtes Gas (Öffnung 5) eines jeden Behälters 1 bis 4 ist über eine Abfuhrleitung 13 mit der Sammelleitung 12 verbunden. In jeder Abfuhrleitung 13 befindet sich ein Absperrventil 14.

Die Vorrichtung weist ein Regeneriergas-Einlass 15 auf. An den Regeneriergas-Einlass 15 schließt sich eine Sammelleitung 16 an. Der Einlass für kühles Regeneriergas (untere Öffnung 6) eines jeden Behälters 1 bis 4 ist über eine jeweilige Zufuhrleitung 17 mit der Sammelleitung 16 verbunden. In jeder Zufuhrleitung 17 befindet sich ein Absperrventil 18.

Die erfindungsgemäße Vorrichtung weist ein Sammelleitungsnetz für erwärmtes Regeneriergas auf. Die Sammelleitung 19 des Sammelleitungsnetzes weist einen ersten Zweig 20 und einen zweiten Zweig 21 auf. Der erste Zweig 20 ist stromaufwärts eines Heizers 22, der stromabwärts des ersten Zweigs 20 angeordnet ist, vorgesehen. Der zweite Zweig 21 ist stromabwärts des Heizers 22 vorgesehen. Der Auslass für erwärmtes Regeneriergas (obere Öffnung 5) eines jeden Behälters 1 bis 4 ist über eine Abfuhrleitung 23 mit dem ersten Zweig 20 der Sammelleitung 19 verbunden. In jeder Abfuhrleitung 23 ist ein Absperrventil 24 vorgesehen.

Der Einlass für erhitztes Regeneriergas (obere Öffnung 5) eines jeden Behälters 1 bis 4 ist über eine Zufuhrleitung 25 mit dem zweiten Zweig 21 der Sammelleitung 19 verbunden. In jeder Zufuhrleitung 25 ist ein Absperrventil 26 vorgesehen.

Die erfindungsgemäße Vorrichtung weist eine By-Pass-Leitung 27 auf, die von der Sammelleitung 16 zum ersten Zweig 20 der Sammelleitung 19 führt. In der By-Pass-Leitung 27 ist ein Absperrventil 28 vorgesehen.

Die erfindungsgemäße Vorrichtung weist einen Auslass 29 für beladenes, erhitztes Regeneriergas auf. Stromaufwärts des Auslasses 29 für beladenes, erhitztes Regeneriergas ist eine Sammelleitung 30 vorgesehen. Jeder Auslass für beladenes, erhitztes Regeneriergas (untere Öffnung 6) eines jeden Behälters 1 bis 4 ist über eine Abfuhrleitung 31 mit der Sammelleitung 30 verbunden. In jeder Abfuhrleitung 31 ist ein Absperrventil 32 vorgesehen.

Parallel zur Abfuhrleitung 31 und dem Absperrventil 32 ist jeweils eine zweite Abfuhrleitung 41 mit einem Absperrventil 42 und einer Drossel 43 vorgesehen. Diese können - wie dargestellt - mit der Sammelleitung 30 verbunden sein oder über eine (nicht dargestellte) eigene Sammelleitung aus der Vorrichtung geführt werden.

Jeder Einlass für gereinigtes Gas (obere Öffnung 5) eines jeden Behälters 1 bis 4 ist über eine Zufuhrleitung 33 mit der Sammelleitung 12 verbunden. In jeder Zufuhrleitung 33 ist ein Absperrventil 34 und eine einstellbare Drossel 35 vorgesehen.

An der oberen Öffnung 5 (je nach Betriebszustand eingesetzt als Auslass für das gereinigte Gas, Auslass für erwärmtes Regeneriergas, Einlass für erhitztes Regeneriergas, Einlass für gereinigtes Gas) ist ein Temperatursensor 36 vorgesehen zum Messen der Gastemperatur in diesem Teil der erfindungsgemäßen Vorrichtung. Ein Temperatursensor 36 ist ebenfalls an jeder unteren Öffnung 6 eines jeden Behälters 1 bis 4 vorgesehen, die je nach Betriebszustand des jeweiligen Behälters als Einlass für das zu reinigende Gas, als Einlass für kühles Regeneriergas oder als Auslass für beladenes, erhitztes Regeneriergas verwendet wird. Ein Temperatursensor 36 ist ebenfalls stromabwärts des Heizers 22 in dem zweiten Zweig 21 der Sammelleitung 19 vorgesehen.

Am Regeneriergas-Einlass 15 sind ein Absperrventil 37, eine einstellbare Drossel 38, ein Druckregelventil 39 und ein Durchflussmesser 40 vorgesehen. Ferner sind nicht dargestellte Druckmesser und Manometer vorgesehen.

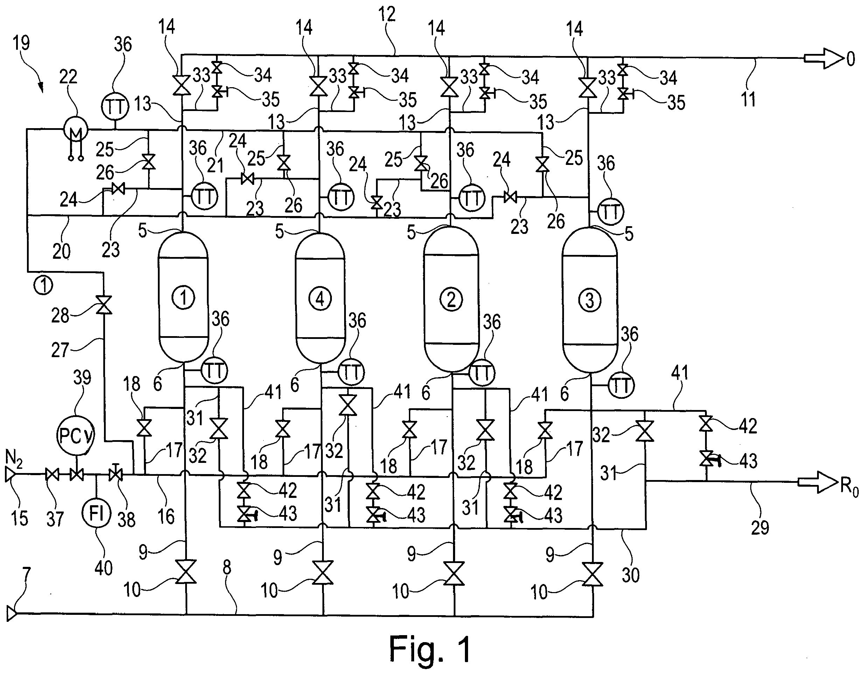

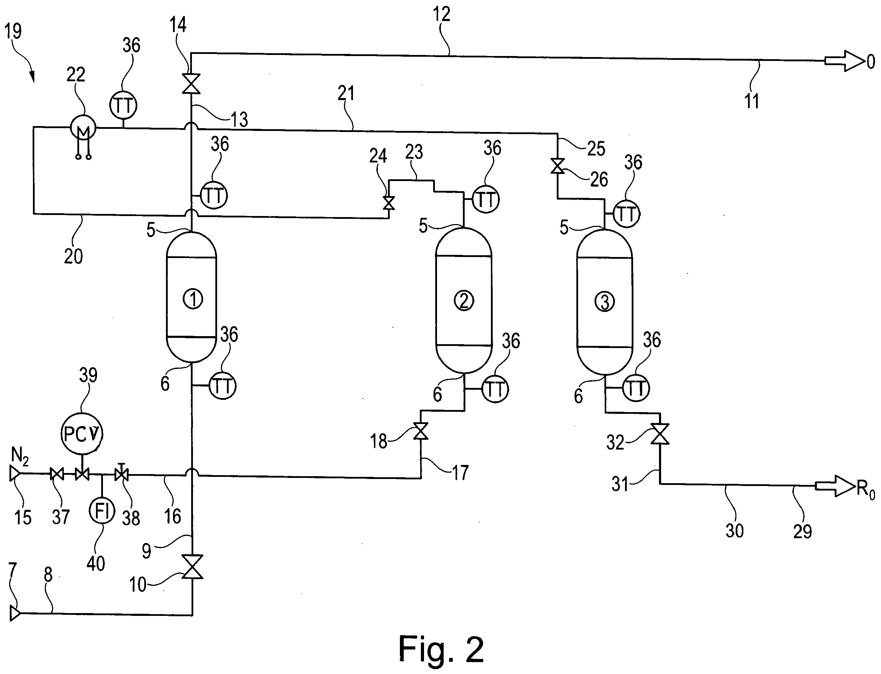

In den Fig. 2 bis 10 werden Betriebszustände in der Fig. 1 dargestellten erfindungsgemäßen Vorrichtung beschrieben. Zur Erhöhung der Übersichtlichkeit wurden in den Fig. 2 bis 10 die Leitungsabschnitte entfernt, durch die in dem jeweiligen Betriebszustand kein Gas strömt. Damit zeigen die Fig. 2 bis 10 auch die für den jeweiligen Betriebszustand minimal notwendigen Leitungsabschnitte. Entscheidet man sich, die Vorteile der Erfindung nur in bestimmten Betriebszuständen zu nutzen, so zeigen die entsprechenden Figuren die Leitungsabschnitte, die hierfür notwendig sind.

Die Fig. 2 zeigt einen ersten Betriebszustand der erfindungsgemäßen Vorrichtung. Das zu reinigende Gas tritt über den Einlass 7 für das zu reinigende Gas in die Sammelleitung 8 ein und strömt über die Zufuhrleitung 9 durch das geöffnete Absperrventil 10 über die untere Öffnung 6, die in diesem Betriebszustand als Einlass für das zu reinigende Gas fungiert, in den ersten Behälter 1 ein. Das zu reinigende Gas durchströmt das in dem ersten Behälter 1 vorhandene Adsorptionsmittel und wird dabei gereinigt und verlässt als gereinigtes Gas die obere Öffnung 5 des ersten Behälters 1, die in diesem Betriebszustand als Auslass für das gereinigte Gas dient. Das gereinigte Gas strömt über die Abfuhrleitung 13 durch das geöffnete Absperrventil 14 in die Sammelleitung 12 und verlässt die erfindungsgemäße Vorrichtung über den Auslass 11 für gereinigtes Gas.

Regeneriergas strömt über den Regeneriergas-Einlass 15 durch das geöffnete Absperrventil 37 in die Sammelleitung 16. Über die Zufuhrleitung 17 und das geöffnete Absperrventil 18 strömt das Regeneriergas über die untere Öffnung 6, die in diesem Betriebszustand als Einlass für kühles Regeneriergas des zweiten Behälters 2 dient, in den zweiten Behälter 2. Bei der vorliegenden Beschreibung des ersten Betriebszustands wird davon ausgegangen, dass sich dieser Betriebszustand zu einem Zeitpunkt einstellt, bei dem die erfindungsgemäße Vorrichtung bereits betrieben worden ist, also bereits Betriebszustände, bei denen zu reinigendes Gas gereinigt wurde, vor dem hier beschriebenen ersten Betriebszustand hatte (die in diesem Ausführungsbeispiel beschriebenen Betriebszustände folgen zyklisch aufeinander). In dem ersten Betriebszustand befindet sich von der unmittelbar zuvor durchgeführten Durchführung des dritten Betriebszustands regeneriertes, heißes Adsorptionsmittel in dem zweiten Behälter 2. Das Regeneriergas befindet sich auf einem niedrigeren Temperaturniveau als das in Behälter 2 befindliche regenerierte, aber heiße Adsorptionsmittel. Das Regeneriergas durchströmt den zweiten Behälter 2 vom Einlass für kühles Regeneriergas (untere Öffnung 6) zum Auslass für erwärmtes Regeneriergas (obere Öffnung 5) und kühlt dabei das in dem Behälter 2 befindliche Regeneriergas ab. Von dem Auslass für erwärmtes Regeneriergas (obere Öffnung 5) strömt das erwärmte Regeneriergas über die Abfuhrleitung 23 und das geöffnete Absperrventil 24 in den ersten Zweig 20 der Sammelleitung 19. Das erwärmte Regeneriergas durchströmt den ersten Zweig 20 und wird im Heizer 22 erhitzt. Vom Heizer 22 durchströmt das erhitzte Regeneriergas den zweiten Zweig 21 der Sammelleitung 19. Von dem zweiten Zweig 21 der Sammelleitung 19 strömt das erhitzte Regeneriergas durch die Zufuhrleitung 25 über das geöffnete Absperrventil 26 über die obere Öffnung 5, die in diesem Betriebszustand als Einlass für erhitztes Regeneriergas fungiert, in den dritten Behälter 3. In dem vor der Durchführung des ersten Betriebszustands durchgeführten dritten Betriebszustand wurde der dritte Behälter 3 zum Reinigen des Gases verwendet. Deshalb befindet sich in dem dritten Behälter 3 beladenes Adsorptionsmittel. Dieses beladene Adsorptionsmittel wird durch das erhitzte Regeneriergas, das von dem Einlass für erhitztes Regeneriergas (obere Öffnung 5) zum Auslass für beladenes, erhitztes Regeneriergas (untere Öffnung 6) durch das im dritten Behälter 3 befindliche beladene Adsorptionsmittel strömt, regeneriert. Das beladene, erhitzte Regeneriergas verlässt den dritten Behälter 3 über den Auslass für beladenes, erhitztes Regeneriergas (untere Öffnung 6) und tritt durch das geöffnete Absperrventil 32 und die Abfuhrleitung 31 in die Sammelleitung 30 ein und wird von dieser zu dem Auslass 29 für beladenes, erhitztes Regeneriergas geführt.

Der vierte Behälter 4 hat in diesem Betriebszustand keine Funktion. Zur Verdeutlichung der Übersicht wurde er deshalb aus der Abbildung der Fig. 2 herausgenommen. Er befindet sich im Stand-by.

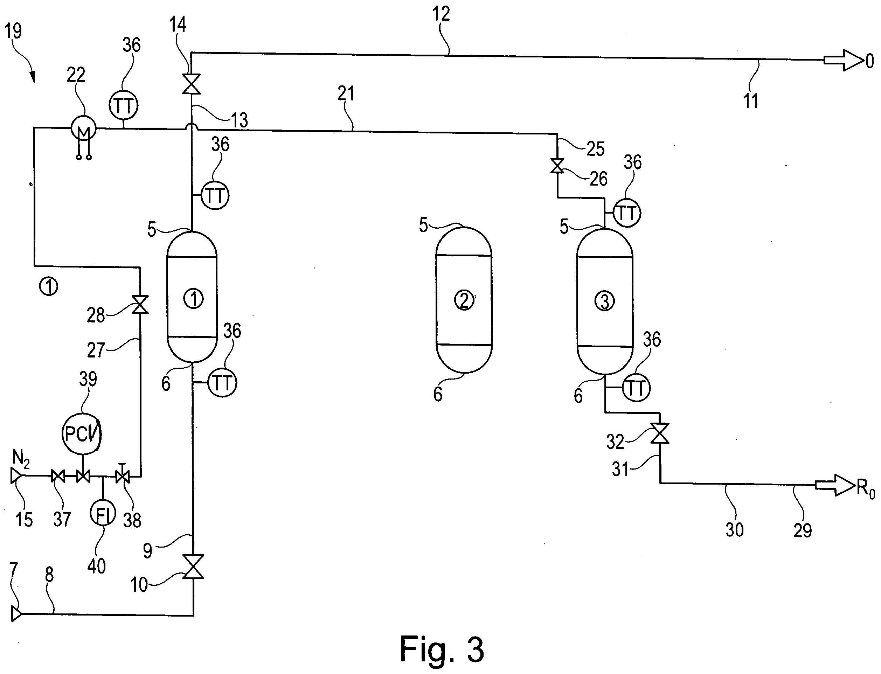

Ziel der Durchströmung des zweiten Behälters 2 mit dem Regeneriergas ist es, das regenerierte, aber erhitzte Adsorptionsmittel im zweiten Behälter 2 abzukühlen. Es ist denkbar, dass die erfindungsgemäße Vorrichtung des ersten Betriebszustands den Teilzustand erreicht, in dem das im zweiten Behälter 2 befindliche regenerierte Adsorptionsmittel hinreichend abgekühlt ist, das im dritten Behälter 3 befindliche zu regenerierende Adsorptionsmittel jedoch noch nicht hinreichend regeneriert ist. In einem solchen Teilzustand des ersten Betriebszustands kann - wie in der Fig. 3 dargestellt - die Durchströmung des zweiten Behälters 2 mit Regeneriergas beendet werden. Das Regeneriergas wird dann vom Regeneriergas-Einlass 15 über die By-Pass-Leitung 27 durch das geöffnete Absperrventil 28 in den ersten Zweig 20 der Sammelleitung 19 geführt. Das Regeneriergas wird dann im Heizer 22 erhitzt und gelangt dann als erhitztes Regeneriergas über die Sammelleitung 21 und die Zufuhrleitung 25 durch das geöffnete Absperrventil 26 über die obere Öffnung 5, die in diesem Betriebszustand als Einlass für erhitztes Regeneriergas dient, in den dritten Behälter 3 und kann dazu verwendet werden, das im dritten Behälter 3 befindliche Adsorptionsmittel zu regenerieren. Vergleichbar dem in Fig. 2 dargestellten Zustand wird das beladene, erhitzte Regeneriergas an der unteren Öffnung 6, die in diesem Betriebszustand als Auslass für beladenes, erhitztes Regeneriergas dient, über die Abfuhrleitung 31 und das geöffnete Absperrventil 32 in die Sammelleitung 30 eingeführt und von dieser über den Auslass 29 für beladenes, erhitztes Regeneriergas aus der Vorrichtung herausgeführt.

Bei der Fig. 3 wurde zur Erhöhung der Übersichtlichkeit jedwede Zu- oder Ableitung zum zweiten Behälter 2 entfernt, um damit anzudeuten, dass er in dem in Fig. 3 dargestellten Teilzustand des ersten Betriebszustands nicht mehr von Gas durchströmt wird. Diese Herausnahme des zweiten Behälters 2 aus dem System kann dadurch erreicht werden, dass die Absperrventile 18, 32, 24, 26, 14, 34 in den Leitungen, die zu dem zweiten Behälter 2 führen oder die von dem zweiten Behälter 2 weg führen, geschlossen werden.

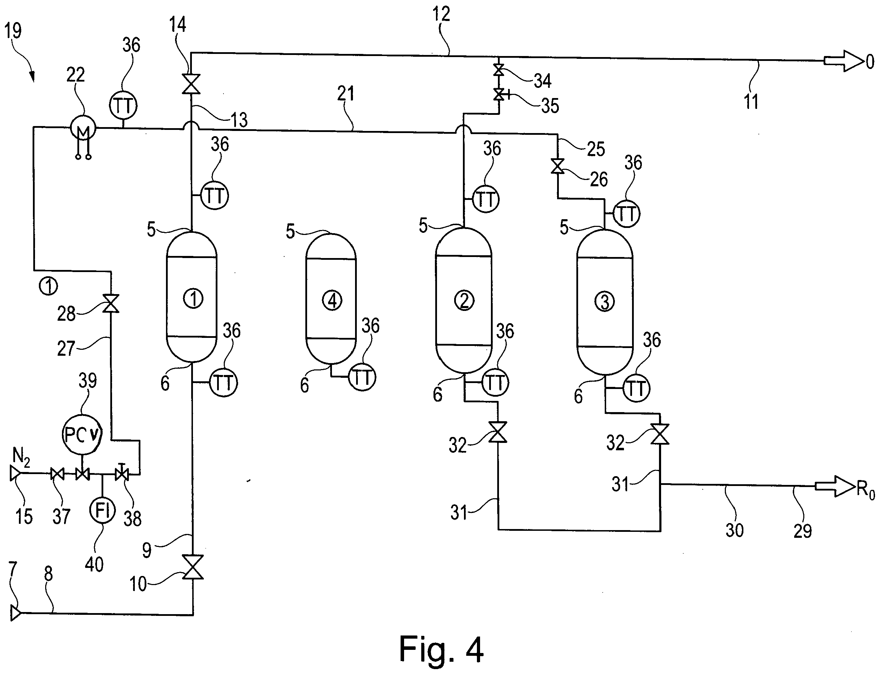

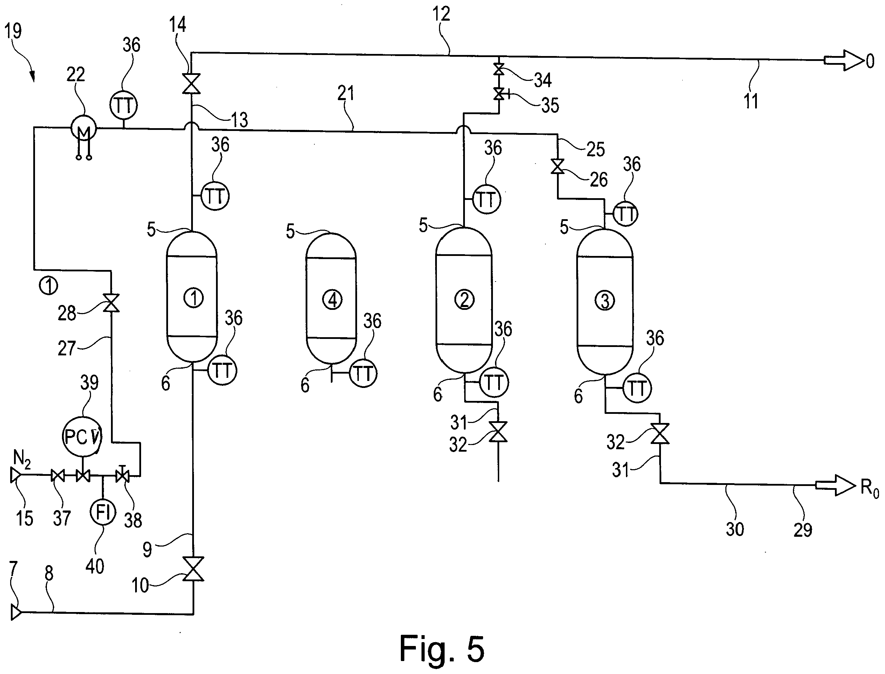

In Vorbereitung des zweiten Betriebszustands wird die Vorrichtung von dem in den Fig. 2 und 3 dargestellten ersten Betriebszustand in einen vorbereitenden Betriebszustand überführt. Dieser ist in den Fig. 4 und 5 dargestellt. In diesem vorbereitenden Betriebszustand kann die Durchströmung des dritten Behälters 3 mit erhitztem Regeneriergas, das über die By-Pass-Leitung 27 zu dem Heizer 22 geführt wurde, wie dies in Fig. 3 dargestellt ist, fortgesetzt werden. Deshalb wird in der Fig. 4 die By-Pass-Leitung 27 nach wie vor dargestellt. Es ist aber auch denkbar, dass in diesem vorbereitenden Betriebszustand das im dritten Behälter 3 befindliche Adsorptionsmittel bereits hinreichend regeneriert ist, so dass eine Durchströmung des dritten Behälters 3 mit Regeneriergas auch beendet werden kann. In dem in Fig. 4 dargestellten vorbereitenden Betriebszustand wird der zweite Behälter 2 darauf vorbereitet, demnächst mit zu reinigendem Gas durchströmt zu werden (oder als nächstes in den Stand-by zu wechseln). Hierfür ist es notwendig, noch im zweiten Behälter 2 befindliches Regeneriergas aus dem zweiten Behälter 2 zu entfernen und zugleich den Druck in dem zweiten Behälter 2 auf das Druckniveau des zu reinigenden Gases zu erhöhen. Hierfür wird in einem ersten Schritt (ersten Teilzustand des vorbereitenden Betriebszustand; Fig. 4) ein Teil des gereinigten Gases aus der Sammelleitung 12 und das geöffnete Absperrventil 34 und das einstellbare Drosselventil 35 über die Zufuhrleitung 33 über die obere Öffnung 5, die in diesem Betriebszustand als Einlass für gereinigtes Gas des zweiten Behälters 2 dient, in den zweiten Behälter 2 eingeführt. Zugleich wird das Absperrventil 32 in der Abfuhrleitung 31 geöffnet, während das Absperrventil 18 verschlossen wird. Dadurch kann das über die obere Öffnung 5 in den zweiten Behälter 2 einströmende gereinigte Gas den zweiten Behälter 2 von oben nach unten durchströmen und dabei in dem zweiten Behälter 2 befindliches Regeneriergas über die untere Öffnung 6 aus dem zweiten Behälter 2 drücken. Dies wird dadurch begünstigt, dass sich das gereinigte Gas auf einem höheren Druckniveau befindet, als das in dem zweiten Behälter 2 befindliche Regeneriergas. Das aus dem zweiten Behälter 2 über die untere Öffnung 6 gedrückte Regeneriergas strömt über die Abfuhrleitung 31 und das geöffnete Absperrventil 32 in die Sammelleitung 30 und verlässt die erfindungsgemäße Vorrichtung über den Auslass 29.

Wurde der zweite Behälter 2 solange mit gereinigtem Gas durchströmt, dass sich kein Regeneriergas mehr in dem zweiten Behälter 2 befindet, so wird das Absperrventil 32 in der Abfuhrleitung 31 geschlossen. Das führt zu einem Druckaufbau in dem zweiten Behälter 2. Dieser ist nun gänzlich mit gereinigtem Gas gefüllt und wird durch den Druckaufbau, der sich aus dem weiter zuströmenden gereinigten Gas über die obere Öffnung 5 ergibt, auf das Druckniveau des gereinigten Gases gebracht. Dieser zweite Schritt des vorbereitenden Betriebszustands ist in Fig. 5. dargestellt.

In den Fig. 4 und 5 ist zudem wieder der vierte Behälter 4 dargestellt. Das erfolgt, um darauf hinweisen zu können, dass sich in dem ersten Betriebszustand (Fig. 3) als auch in dem vorbereitenden Betriebszustand (Fig. 4, 5) der vierte Behälter 4 in dem Zustand befindet, den der zweite Behälter 2 am Ende des zweiten Schritts des vorbereitenden Betriebszustands (Fig. 5) erreicht: In den in den Fig. 3 bis 5 dargestellten Betriebszuständen ist der vierte Behälter 4 mit gereinigtem Gas gefüllt und hat das Druck- und Temperaturniveau des gereinigten Gases.

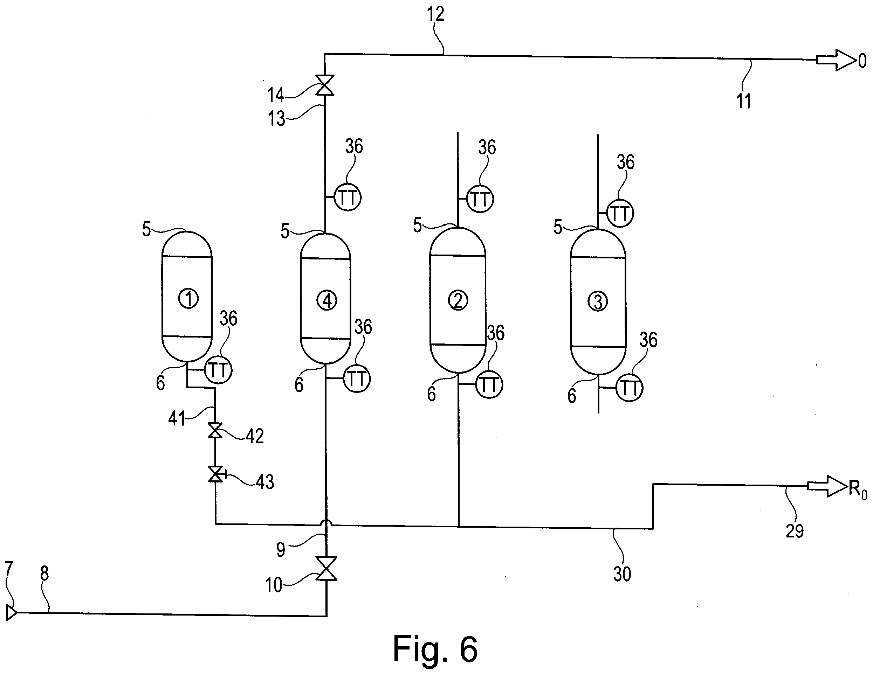

Wird nun der Zeitpunkt im Betrieb der erfindungsgemäßen Vorrichtung erreicht, indem die Adsorptionskapazität des im ersten Behälters 1 befindlichen Adsorptionsmittels erschöpft ist, wird in den in Fig. 6 dargestellten Übergangsbetriebszustand geschaltet, der der Vorbereitung des zweiten Betriebszustands dient.

In diesem Übergangsbetriebszustand sind der zweite Behälter 2 und der dritte Behälter 3 zunächst aus dem System genommen. Der zweite Behälter 2 beinhaltet bereits regeneriertes Adsorptionsmittel, er ist mit gereinigtem Gas gefüllt und befindet sich auf dem Druck- und Temperaturniveau des gereinigten Gases. Er ist somit in einer Stand-By-Stellung, um in den nächst nachfolgendem Betriebszustand als Behälter für das Reinigen des Gases eingesetzt zu werden. In dem in Fig. 6 dargestellten Übergangsbetriebszustands befindet sich der dritte Behälter 3 auf dem (niedrigeren) Druckniveau des Regeneriergases und beinhaltet regeneriertes, aber heißes Adsorptionsmittel. Das Adsorptionsmittel im ersten Behälter 1 muss als nächstes regeneriert werden. Hierzu muss der erste Behälter 1 auf das Druckniveau des Regeneriergases gebracht (entspannt) werden. Dazu wird das Absperrventil 42 in der Abfuhrleitung 41 des ersten Behälters 1 geöffnet. Dadurch kann Gas mit hohem Druckniveau, das sich noch in dem ersten Behälter 1 befindet, nachdem für das zu reinigende Gas von dem ersten Behälter 1 auf den vierten Behälter 4 umgeschaltet wurde, über die untere Öffnung 6 und die Abfuhrleitung 41 über das geöffnete Absperrventil 42 in die Sammelleitung 30 strömen und die erfindungsgemäße Vorrichtung über den Auslass 29 verlassen.

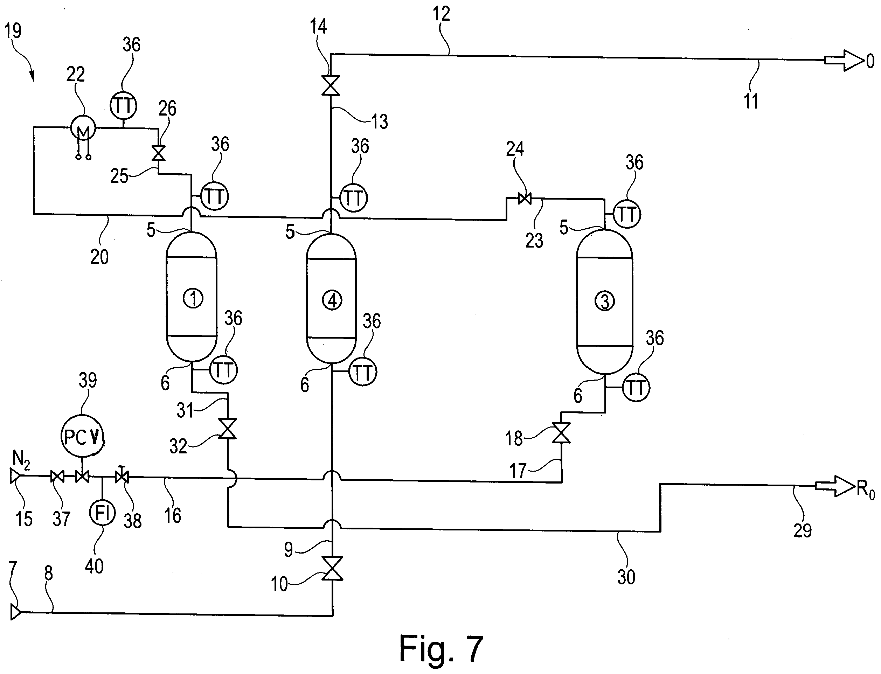

Nachdem der erste Behälter 1 auf das Druckniveau des Regeneriergases gebracht wurde, wird die Vorrichtung in den zweiten Betriebszustand gebracht. Dieser ist in Fig. 7 dargestellt. Das zu reinigende Gas tritt über den Einlass 7 für das zu reinigende Gas in die Sammelleitung 8 ein und strömt über die Zufuhrleitung 9 durch das geöffnete Absperrventil 10 über die untere Öffnung 6, die in diesem Betriebszustand als Einlass für das zu reinigende Gas fungiert, in den vierten Behälter 4 ein. Das zu reinigende Gas durchströmt das in dem vierten Behälter 4 vorhandene Adsorptionsmittel und wird dabei gereinigt und verlässt als gereinigtes Gas die obere Öffnung 5 des vierten Behälters 4, die in diesem Betriebszustand als Auslass für das gereinigte Gas dient. Das gereinigte Gas strömt über die Abfuhrleitung 13 durch das geöffnete Absperrventil 14 in die Sammelleitung 12 und verlässt die erfindungsgemäße Vorrichtung über den Auslass 11 für gereinigtes Gas.

Regeneriergas strömt über den Regeneriergas-Einlass 15 durch das geöffnete Absperrventil 37 in die Sammelleitung 16. Über die Zufuhrleitung 17 und das geöffnete Absperrventil 18 strömt das Regeneriergas über die untere Öffnung 6, die in diesem Betriebszustand als Einlass für kühles Regeneriergas des zweiten Behälters 2 dient, in den dritten Behälter 3. In dem zweiten Betriebszustand befindet sich von der unmittelbar zuvor durchgeführten Durchführung des ersten Betriebszustands regeneriertes, heißes Adsorptionsmittel in dem dritten Behälter 3. Das Regeneriergas befindet sich auf einem niedrigeren Temperaturniveau als das in dem dritten Behälter 3 befindliche regenerierte, aber heiße Adsorptionsmittel. Das Regeneriergas durchströmt den dritten Behälter 3 vom Einlass für kühles Regeneriergas (untere Öffnung 6) zum Auslass für erwärmtes Regeneriergas (obere Öffnung 5) und kühlt dabei das in dem dritten Behälter 3 befindliche Regeneriergas ab. Von dem Auslass für erwärmtes Regeneriergas (obere Öffnung 5) strömt das erwärmte Regeneriergas über die Abfuhrleitung 23 und das geöffnete Absperrventil 24 in den ersten Zweig 20 der Sammelleitung 19. Das erwärmte Regeneriergas durchströmt den ersten Zweig 20 und wird im Heizer 22 erhitzt. Vom Heizer 22 durchströmt das erhitzte Regeneriergas den zweiten Zweig 21 der Sammelleitung 19. Von dem zweiten Zweig 21 der Sammelleitung 19 strömt das erhitzte Regeneriergas durch die Zufuhrleitung 25 über das geöffnete Absperrventil 26 über die obere Öffnung 5, die in diesem Betriebszustand als Einlass für erhitztes Regeneriergas fungiert, in den ersten Behälter 1. In dem vor der Durchführung des zweiten Betriebszustand durchgeführten ersten Betriebszustand wurde der erste Behälter 1 zum Reinigen des Gases verwendet. Deshalb befindet sich in dem ersten Behälter 1 beladenes Adsorptionsmittel. Dieses beladene Adsorptionsmittel wird durch das erhitzte Regeneriergas, das von dem Einlass für erhitztes Regeneriergas (obere Öffnung 5) zum Auslass für beladenes, erhitztes Regeneriergas (untere Öffnung 6) durch das im ersten Behälter 1 befindliche beladene Adsorptionsmittel strömt, regeneriert. Das beladene, erhitzte Regeneriergas verlässt den ersten Behälter 1 über den Auslass für beladenes, erhitztes Regeneriergas (untere Öffnung 6) und tritt durch das geöffnete Absperrventil 32 und die Abfuhrleitung 31 in die Sammelleitung 30 ein und wird von dieser zu dem Auslass 29 für beladenes, erhitztes Regeneriergas geführt.

Der zweite Behälter 2 hat in diesem Betriebszustand keine Funktion. Zur Verdeutlichung der Übersicht wurde er deshalb aus der Abbildung der Fig. 2 herausgenommen. Er befindet sich im Stand-by.

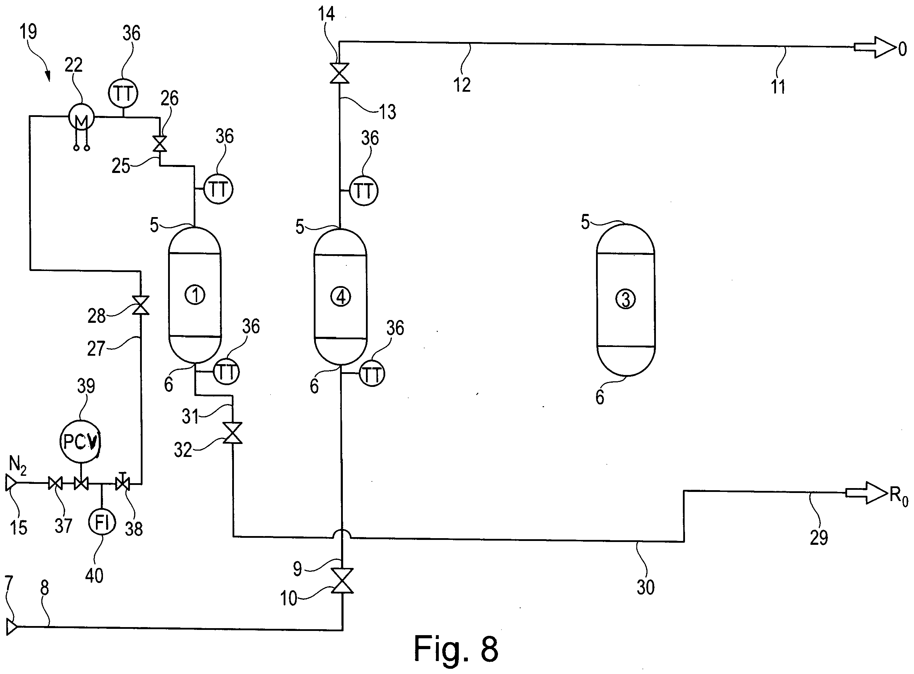

Es ist leicht ersichtlich, dass auch in dem in Fig. 7 dargestellten zweiten Betriebszustand der Teilzustand erreicht werden kann, bei dem das regenerierte Adsorptionsmittel im dritten Behälter 3 durch das Durchströmen mit Regeneriergas bereits hinreichend abgekühlt ist, während das zu regenerierende Adsorptionsmittel im ersten Behälter 1 regeneriert werden muss. Vergleichbar dem in Fig. 3 dargestellten Betriebszustand ist es auch bei dem in Fig. 7 dargestellten zweiten Betriebszustand möglich, den dritten Behälter 3 aus dem System zu nehmen und Regeneriergas über die By-Pass-Leitung 27 zum Heizer 22 und von diesem über den zweiten Teil der Sammelleitung 19 und die Zufuhrleitung 25 über das geöffnete Absperrventil 26 über die obere Öffnung 5 in den ersten Behälter 1 strömen zu lassen (vgl. Fig. 8).

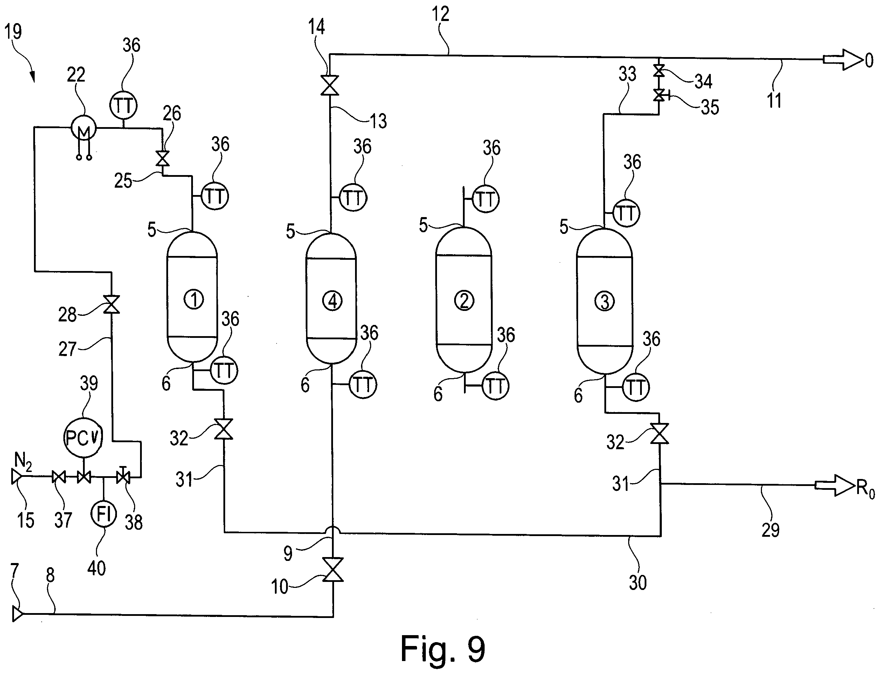

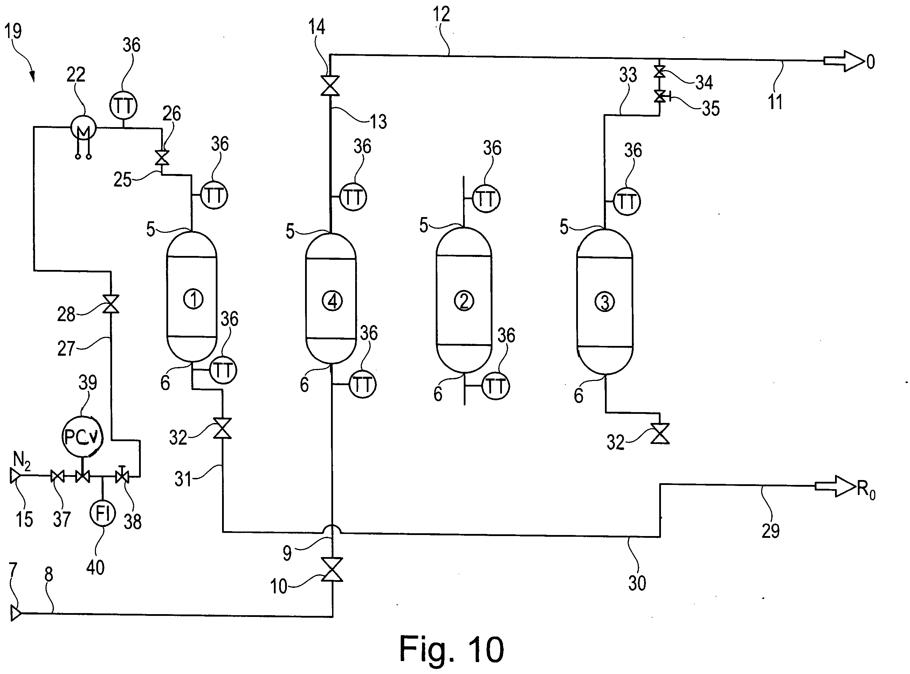

In dem dann folgenden vorbereitenden Betriebszustand (vgl. Fig. 9 und 10) wird der dritte Behälter 3 durch Verbinden mit der Sammelleitung 12 zunächst gespült (das in dem dritten Behälter 3 befindliche Regeneriergas aus dem dritten Behälter 3 durch die untere Öffnung 6 und die Abfuhrleitung 31 durch das geöffnete Absperrventil 32 in die Sammelleitung 30 und dort aus dem Auslass gedrückt). Anschließend (vgl. Fig. 10) wird die untere Öffnung 6 durch Schließen des Absperrventils 32 verschlossen, so dass in dem dritten Behälter 3 das nun dort befindliche gereinigte Gas den Druck im dritten Behälter 3 aufbauen kann. Danach (Zustand der Fig. 10) befindet sich die erfindungsgemäße Vorrichtung in einem vergleichbaren Zustand, zu dem sie sich in der Fig. 5 befand.

Das System kann nun in einen Übergangsbetriebszustand vergleichbar dem in Fig. 6 dargestellten Betriebszustand geschaltet werden. In diesem Übergangsbetriebszustand sind der dritte Behälter 3 und der erste Behälter 1 zunächst aus dem System genommen. Der dritte Behälter 3 beinhaltet bereits regeneriertes Adsorptionsmittel, er ist mit gereinigtem Gas gefüllt und befindet sich auf dem Druck- und Temperaturniveau des gereinigten Gases. Er ist somit in einer Stand-By-Stellung, um in dem nächst nachfolgenden Betriebszustand als Behälter für das Reinigen des Gases eingesetzt zu werden. Der erste Behälter 1 befindet sich auf dem (niedrigeren) Druckniveau des Regeneriergases und beinhaltet regeneriertes, aber heißes Adsorptionsmittel. Das Adsorptionsmittel im vierten Behälter 4 muss als nächstes regeneriert werden. Hierzu muss der vierte Behälter 4 auf das Druckniveau des Regeneriergases gebracht (entspannt) werden. Dazu wird das Absperrventil 32 in der Abfuhrleitung 31 des vierten Behälters 4 geöffnet. Dadurch kann Gas mit hohem Druckniveau, das sich noch in dem vierten Behälter 4 befindet, nachdem für das zu reinigende Gas von dem vierten Behälter 4 auf den zweiten Behälter 2 umgeschaltet wurde, über die untere Öffnung 6 und die Abfuhrleitung 31 über das geöffnete Absperrventil 32 in die Sammelleitung 30 strömen und die erfindungsgemäße Vorrichtung über den Auslass 29 verlassen.

Es ist ersichtlich, dass die Vorrichtung dann vergleichbare Zustände zu den vorher beschriebenen Zuständen durchläuft, nämlich einen dritten Betriebszustand durchläuft, der vergleichbar dem in den Fig. 2 und 7 dargestellten Betriebszustand ist, wobei im dritten Betriebszustand der erste Behälter 1 von Regeneriergas durchströmt wird und dieses erwärmt, der zweite Behälter 2 das Gas reinigt, der dritte Behälter 3 auf Stand-By ist und der vierte Behälter 4 durch im ersten Behälter 1 erwärmtes und im Heizer 22 erhitztes Regeneriergas regeneriert wird. Auch ist ersichtlich, dass im Rahmen des dritten Betriebszustands ein Zustand erreicht werden kann, bei dem das Adsorptionsmittel im ersten Behälter 1 hinreichend abgekühlt ist, so dass der erste Behälter 1 vergleichbar dem dritten Behälter 3 der Fig. 8 oder vergleichbar dem zweiten Behälter 2 in der Fig. 3 aus dem System genommen werden kann und erhitztes Regeneriergas dadurch erzeugt wird, dass Regeneriergas von Regeneriergas-Einlass 15 über die By-Pass-Leitung 27 und den Heizer 22 zum vierten Behälter 4 geführt wird. Auch ist es ersichtlich, dass sich an den dritten Betriebszustand ein vorbereitender Betriebszustand anschließt, in dem der erste Behälter 1 (vergleichbar dem dritten Behälter 3 in der Fig. 9 oder vergleichbar dem zweiten Behälter 2 in der Fig. 4) mit gereinigtem Gas gespült wird und dann (vergleichbar im dritten Behälter 3 in der Fig. 10 oder dem zweiten Behälter 2 in der Fig. 5) eine Phase des Druckaufbaus in dem ersten Behälter 1 stattfindet.

Darauf folgt - vergleichbar dem Zustand in der Fig. 6 - ein Zustand, bei dem das zu reinigende Gas nicht mehr den zweiten Behälter 2 durchströmt, sondern den dritten Behälter 3 und der zweite Behälter 2 vergleichbar dem ersten Behälter 1 in der Fig. 6 einer Druckentspannung unterzogen wird, bis dann der vierte Betriebszustand erreicht wird. In diesem vierten Betriebszustand befindet sich der erste Behälter 1 im Stand-By, der zweite Behälter 2 wird regeneriert, der dritte Behälter 3 reinigt das zu reinigende Gas und der vierte Behälter 4 erwärmt das Regeneriergas.

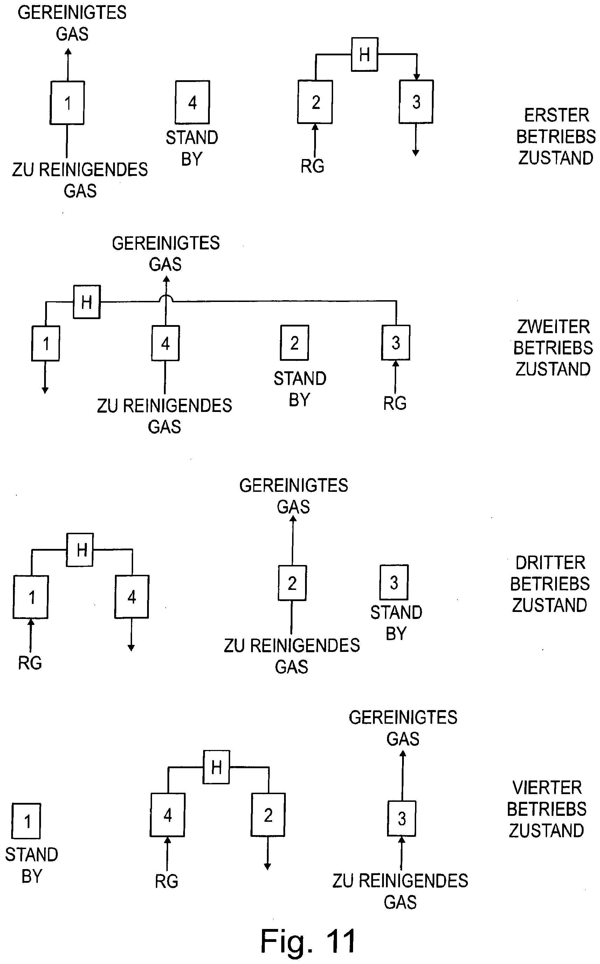

Die Fig. 11 zeigt schematisch mit Symbolen die Zustände der vier Behälter im ersten Betriebszustand, zweiten Betriebszustand, dritten Betriebszustand und im vierten Betriebszustand. Aus der Darstellung wird ersichtlich, welcher der vier Behälter in dem jeweiligen Betriebszustand das Gas reinigt, welcher Behälter im Stand-By, welcher Behälter das Regeneriergas erwärmt, so dass es dann über den Heizer (H) erhitzt in den Behälter eingeführt werden kann, in dem das Adsorptionsmittel zu regenerieren ist.

## Patentansprüche

1. Vorrichtung zur Temperaturwechsel-Adsorption mit einem ersten Behälter (1) und einem zweiten Behälter (2) und einem dritten Behälter (3), bei der
- der erste, der zweite und der dritte Behälter (1, 2, 3) jeweils zumindest ein Adsorptionsmittel aufweisen, das für die Temperaturwechsel-Adsorption geeignet ist,
**dadurch gekennzeichnet, dass**
- der erste, der zweite und der dritte Behälter (1, 2, 3) jeweils einen Einlass für das zu reinigende Gas und einen Auslass für das gereinigte Gas aufweisen,
- der erste, der zweite und der dritte Behälter (1, 2, 3) jeweils einen Einlass für kühles Regeneriergas aufweisen, der insbesondere bevorzugt durch den Einlass für das gereinigte Gas gebildet wird,
- der erste, der zweite und der dritte Behälter (1, 2, 3) jeweils einen Auslass für erwärmtes Regeneriergas aufweisen, der insbesondere bevorzugt durch den Auslass für das gereinigte Gas gebildet wird,
- der erste, der zweite und der dritte Behälter (1, 2, 3) jeweils einen Einlass für erhitztes Regeneriergas aufweisen, der insbesondere bevorzugt durch den Auslass für das gereinigte Gas gebildet wird,
- der erste, der zweite und der dritte Behälter (1, 2, 3) jeweils einen Auslass für beladenes, erhitztes Regeneriergas aufweisen, der insbesondere bevorzugt durch den Einlass für das zu reinigende Gas gebildet wird, und
- der Auslass für erwärmtes Regeneriergas des ersten Behälters (1) mit dem Einlass für erhitztes Regeneriergas des zweiten Behälters (2) verbunden ist, und/oder der Auslass für erwärmtes Regeneriergas des zweiten Behälters (2) mit dem Einlass für erhitztes Regeneriergas des dritten Behälters (3) verbunden ist und/oder der Auslass für erwärmtes Regeneriergas des dritten Behälters (3) mit dem Einlass für erhitztes Regeneriergas des ersten Behälters (1) verbunden ist.

2. Vorrichtung zur Temperaturwechsel-Adsorption mit n Behältern (1,2,3) mit n ≥ 3, , bei der
- jeder Behälter (1, 2, 3) zumindest ein Adsorptionsmittel aufweisen, das für die Temperaturwechsel-Adsorption geeignet ist,
**dadurch gekennzeichnet, dass**
- jeder Behälter (1, 2, 3) einen Einlass für das zu reinigende Gas und einen Auslass für das gereinigte Gas aufweisen,
- jeder Behälter (1, 2, 3) einen Einlass für kühles Regeneriergas aufweisen, der insbesondere bevorzugt durch den Einlass für das gereinigte Gas gebildet wird,
- jeder Behälter (1, 2, 3) einen Auslass für erwärmtes Regeneriergas aufweisen, der insbesondere bevorzugt durch den Auslass für das gereinigte Gas gebildet wird,
- jeder Behälter (1, 2, 3) einen Einlass für erhitztes Regeneriergas aufweisen, der insbesondere bevorzugt durch den Auslass für das gereinigte Gas gebildet wird,
- jeder Behälter (1, 2, 3) einen Auslass für beladenes, erhitztes Regeneriergas aufweisen, der insbesondere bevorzugt durch den Einlass für das zu reinigende Gas gebildet wird, und
- der Auslass für erwärmtes Regeneriergas eines jeden Behälters der n Behälter zumindest mit einem Einlass für erhitztes Regeneriergas eines anderen Behälters der n Behälter verbunden ist.

3. Vorrichtung nach Anspruch 1 oder 2, **dadurch gekennzeichnet, dass** der Auslass für erwärmtes Regeneriergas des ersten Behälters (1) über einen Heizer (22) mit dem Einlass für erhitztes Regeneriergas des zweiten Behälters (2) verbunden ist, und/oder der Auslass für erwärmtes Regeneriergas des zweiten Behälters (2) über einen Heizer (22) mit dem Einlass für erhitztes Regeneriergas des dritten Behälters (3) verbunden ist und/oder der Auslass für erwärmtes Regeneriergas des dritten Behälters (3) über einen Heizer (22) mit dem Einlass für erhitztes Regeneriergas des ersten Behälters (1) verbunden ist.

4. Vorrichtung nach einem der Ansprüche 1 bis 3, **gekennzeichnet durch** ein Leitungsnetz für Regeneriergas mit einem Regeneriergas-Einlass (15), wobei der jeweilige Einlass für kühles Regeneriergas des jeweiligen Behälters (1, 2, 3, 4) mit dem Regeneriergas-Einlass (15) verbunden ist.

5. Vorrichtung nach einem der Ansprüche 1 bis 4, **gekennzeichnet durch** ein Sammelleitungsnetz für erwärmtes Regeneriergas mit einer Sammelleitung (19), wobei jeder Auslass für erwärmtes Regeneriergas über eine Abfuhrleitung (23) mit der Sammelleitung (19) verbunden ist, wobei insbesondere bevorzugt in der jeweiligen Abfuhrleitung (23) ein Absperrventil (24) vorgesehen ist.

6. Vorrichtung nach Anspruch 5, **dadurch gekennzeichnet, dass** jeder Einlass für erhitztes Regeneriergas über eine Zufuhrleitung (25) mit der Sammelleitung (19) verbunden ist, wobei insbesondere bevorzugt in der jeweiligen Zufuhrleitung (25) ein Absperrventil (26) vorgesehen ist.

7. Vorrichtung nach einem der Ansprüche 5 oder 6, **dadurch gekennzeichnet, dass** in der Sammelleitung (19) ein Heizer (22) vorgesehen ist.

8. Vorrichtung nach einem der Ansprüche 4 bis 6, **gekennzeichnet durch** eine By-Pass-Leitung (27), die den Regeneriergas-Einlass (15) mit der Sammelleitung (19) verbindet, wobei insbesondere bevorzugt in der By-Pass-Leitung (27) ein Absperrventil (28) vorgesehen ist.

9. Vorrichtung nach einem der Ansprüche 1 bis 8, **dadurch gekennzeichnet, dass**
- am Einlass für das zu reinigende Gas und/oder
- am Auslass für das gereinigte Gas und/oder
- am Einlass für kühles Regeneriergas und/oder
- am Auslass für erwärmtes Regeneriergas und/oder
- am Einlass für erhitztes Regeneriergas und/oder
- am Auslass für beladenes, erhitztes Regeneriergas zumindest eines Behälter (1, 2, 3, 4), vorzugsweise jedes Behälters (1, 2, 3, 4), und/oder
- am Regeneriergas-Einlass (15) ein Temperatursensor (36) zum Messen der Gastemperatur und/oder ein Durchflussmesser (40) und/oder ein Druckregelventil (39) vorgesehen ist.

10. Vorrichtung nach einem der Ansprüche 1 bis 9, **dadurch gekennzeichnet, dass** der Auslass für das gereinigte Gas des ersten Behälters (1) mit einem Einlass für gereinigtes Gas des zweiten Behälters (2) verbunden ist, und/oder der Auslass für das gereinigte Gas des zweiten Behälters (2) mit einem Einlass für gereinigtes Gas des dritten Behälters (3) verbunden ist und/oder der Auslass für das gereinigte Gas des dritten Behälters (3) mit einem Einlass für gereinigtes Gas des ersten Behälters (1) verbunden ist.

11. Verfahren zur Temperaturwechsel-Adsorption, bei dem in einem ersten Betriebszustand
- das zu reinigende Gas über einen Einlass für das zu reinigende Gas eines ersten Behälters (1), der zumindest ein Adsorptionsmittel aufweist, das für die Temperaturwechsel-Adsorption geeignet ist, in den ersten Behälter (1) eingeführt und nach Durchströmen des Adsorptionsmittels in dem ersten Behälter (1) über einen Auslass für gereinigtes Gas aus dem ersten Behälter (1) abgeführt wird,
- ein Regeneriergas erhitzt wird und über einen Einlass für erhitztes Regeneriergas eines dritten Behälters (3), der zumindest ein Adsorptionsmittel aufweist, das für die Temperaturwechsel-Adsorption geeignet ist, in den dritten Behälter (3) eingeführt und nach Durchströmen des Adsorptionsmittels in den dritten Behälter (3) als beladenes, erhitztes Regeneriergas über einen Auslass für beladenes, erhitztes Regeneriergas aus dem dritten Behälter (3) abgeführt wird,
und in einem zweiten Betriebszustand
- das zu reinigende Gas über einen Einlass für das zu reinigende Gas eines zweiten Behälters (2), der zumindest ein Adsorptionsmittel aufweist, das für die Temperaturwechsel-Adsorption geeignet ist, in den zweiten Behälter (2) eingeführt und nach Durchströmen des Adsorptionsmittels in den zweiten Behälter (2) über einen Auslass für gereinigtes Gas aus dem zweiten Behälter (2) abgeführt wird, oder das zu reinigende Gas über einen Einlass für das zu reinigende Gas eines vierten Behälters (4), der zumindest ein Adsorptionsmittel aufweist, das für die Temperaturwechsel-Adsorption geeignet ist, in den vierten Behälter (4) eingeführt und nach Durchströmen des Adsorptionsmittels in den vierten Behälter (4) über einen Auslass für gereinigtes Gas aus dem vierten Behälter (4) abgeführt wird, während ein zweiter Behälter (2) in einem Stand-by ist,
- ein Regeneriergas über einen Einlass für kühles Regeneriergas des dritten Behälters (3) in den dritten Behälter (3) eingeführt und nach Durchströmen des Adsorptionsmittels in den dritten Behälter (3) als erwärmtes Regeneriergas über einen Auslass für erwärmtes Regeneriergas aus dem dritten Behälter (3) abgeführt wird,
- das erwärmte Regeneriergas erhitzt wird und über einen Einlass für erhitztes Regeneriergas des ersten Behälters (1) in den ersten Behälter (1) eingeführt und nach Durchströmen des Adsorptionsmittels in den ersten Behälter (1) als beladenes, erhitztes Regeneriergas über einen Auslass für beladenes, erhitztes Regeneriergas aus dem ersten Behälter (1) abgeführt wird.

12. Verfahren nach Anspruch 11, **dadurch gekennzeichnet, dass** vor einem Wechsel von dem ersten Betriebszustand in den zweiten Betriebszustand der Auslass für das gereinigte Gas des ersten Behälters (1) geschlossen und der erste Behälter (1) einer Druckentspannung unterzogen wird.

13. Verfahren nach Anspruch 11 oder 12, **dadurch gekennzeichnet, dass** in dem ersten Betriebszustand das Regeneriergas über einen Einlass für kühles Regeneriergas des zweiten Behälters (2) in den zweiten Behälter (2) eingeführt und nach Durchströmen des Adsorptionsmittels in den zweiten Behälter (2) als erwärmtes Regeneriergas über einen Auslass für erwärmtes Regeneriergas aus dem zweiten Behälter (2) abgeführt wird, und vor einem Wechsel von dem ersten Betriebszustand in den zweiten Betriebszustand die Zufuhr von Regeneriergas in den zweiten Behälter (2) gestoppt wird und ein Teil des über den Auslass für gereinigtes Gases aus dem ersten Behälter (1) abgeführten gereinigten Gas über einen Einlass für gereinigtes Gas des zweiten Behälters (2) in den zweiten Behälter (2) einströmt.

14. Verfahren nach einem der Ansprüche 11 bis 13, **gekennzeichnet durch** einen dritten Betriebszustand, bei dem bei einer Durchführung des Verfahrens an einer Vorrichtung mit einem ersten, einem zweiten und einem dritten Behälter (1, 2, 3),
- das zu reinigende Gas über einen Einlass für das zu reinigende Gas eines dritten Behälters (3) in den dritten Behälter (3) eingeführt und nach Durchströmen des Adsorptionsmittels in den dritten Behälter (3) über einen Auslass für gereinigtes Gas aus dem dritten Behälter (3) abgeführt wird,
- ein Regeneriergas über einen Einlass für kühles Regeneriergas des ersten Behälters (1) in den ersten Behälter (1) eingeführt und nach Durchströmen des Adsorptionsmittels in den ersten Behälter (1) als erwärmtes Regeneriergas über einen Auslass für erwärmtes Regeneriergas aus dem ersten Behälter (1) abgeführt wird,
- das erwärmte Regeneriergas erhitzt wird und über einen Einlass für erhitztes Regeneriergas des zweiten Behälters (2) in den zweiten Behälter (2) eingeführt und nach Durchströmen des Adsorptionsmittels in den zweiten Behälter (2) als beladenes, erhitztes Regeneriergas über einen Auslass für beladenes, erhitztes Regeneriergas aus dem zweiten Behälter (2) abgeführt wird.

15. Verfahren nach einem der Ansprüche 11 bis 13, **gekennzeichnet durch** einen dritten Betriebszustand, bei dem bei einer Durchführung des Verfahrens an einer Vorrichtung mit einem ersten, einem zweiten, einem dritten und einem vierten Behälter (1, 2, 3, 4),
- das zu reinigende Gas über einen Einlass für das zu reinigende Gas des zweiten Behälters (2), der in dem zweiten Betriebszustand im Stand-by war, in den zweiten Behälter (2) eingeführt und nach Durchströmen des Adsorptionsmittels in den zweiten Behälter (2) über einen Auslass für gereinigtes Gas aus dem zweiten Behälter (2) abgeführt wird, während der dritte Behälter (3) im Stand-by ist,
- ein Regeneriergas über einen Einlass für kühles Regeneriergas des ersten Behälters (1) in den ersten Behälter (1) eingeführt und nach Durchströmen des Adsorptionsmittels in den ersten Behälter (1) als erwärmtes Regeneriergas über einen Auslass für erwärmtes Regeneriergas aus dem ersten Behälter (1) abgeführt wird,
- das erwärmte Regeneriergas erhitzt wird und über einen Einlass für erhitztes Regeneriergas des vierten Behälters (4) in den vierten Behälter (4) eingeführt und nach Durchströmen des Adsorptionsmittels in den vierten Behälter (4) als beladenes, erhitztes Regeneriergas über einen Auslass für beladenes, erhitztes Regeneriergas aus dem vierten Behälter (4) abgeführt wird.

16. Verfahren nach einem der Ansprüche 11 bis 15, **dadurch gekennzeichnet, dass** es mit einer Vorrichtung nach einem der Ansprüche 1 bis 10 durchgeführt wird.

17. Verwendung der Vorrichtung nach einem der Ansprüche 1 bis 10 und/oder Verwendung des Verfahrens nach einem der Ansprüche 11 bis 16 zur Erdgastrocknung und Entfernung von Restgehalt an CO₂ oder zur CO₂-Trockung und Entfernung von Methanol.
